(19) Europäisches Patentamt
European Patent Office
Office européen des brevets

(11) **EP 2 223 802 B1**

(12) **EUROPEAN PATENT SPECIFICATION**

(45) Date of publication and mention
of the grant of the patent:
**09.09.2015 Bulletin 2015/37**

(51) Int Cl.:
***B32B 27/32*** (2006.01)   ***B32B 5/18*** (2006.01)
***B32B 27/00*** (2006.01)   ***B32B 27/10*** (2006.01)
***B65D 3/22*** (2006.01)   ***B65D 65/40*** (2006.01)
***B65D 81/38*** (2006.01)

(21) Application number: **08862917.5**

(22) Date of filing: **19.12.2008**

(86) International application number:
**PCT/JP2008/073244**

(87) International publication number:
**WO 2009/078487 (25.06.2009 Gazette 2009/26)**

(54) **RESIN FOR FOAMABLE LAYERED PRODUCT, FOAMABLE LAYERED PRODUCT, AND FOAMED CONVERTED PAPER AND HEAT-INSULATING CONTAINER BOTH OBTAINED FROM THE SAME**

HARZ FÜR SCHÄUMBARES SCHICHTPRODUKT, SCHÄUMBARES SCHICHTPRODUKT SOWIE DARAUS HERGESTELLTES GESCHÄUMTES VERARBEITETES PAPIER UND WÄRMEDÄMMENDES BEHÄLTNIS

RÉSINE POUR PRODUIT À COUCHE EXPANSIBLE, PRODUIT À COUCHE EXPANSIBLE, PAPIER TRANSFORMÉ EXPANSÉ ET RÉCIPIENT THERMO-ISOLANT OBTENUS À PARTIR DE CETTE RÉSINE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **19.12.2007 JP 2007327803**
**11.09.2008 JP 2008233694**

(43) Date of publication of application:
**01.09.2010 Bulletin 2010/35**

(73) Proprietor: **Japan Polyethylene Corporation Tokyo 100-8251 (JP)**

(72) Inventor: **SAKAMOTO, Shinji**
**Kawasaki-shi**
**Kanagawa 210-8548 (JP)**

(74) Representative: **Vossius & Partner**
**Patentanwälte Rechtsanwälte mbB**
**Siebertstrasse 3**
**81675 München (DE)**

(56) References cited:
**EP-A1- 1 780 009    WO-A1-2006/019066**
**JP-A- 10 128 928    JP-A- 10 128 928**
**JP-A- 2000 052 514    JP-A- 2007 168 178**
**JP-A- 2007 168 178**

**EP 2 223 802 B1**

## Description

TECHNICAL FIELD

The present invention relates to a resin for foamable laminate, a foamable laminate, and a foamed paper and a heat-insulating container comprising it, and precisely to a resin for foamable laminate which, upon heating, gives foamed cells having a sufficient height (foamed layer), a foamable laminate, and a foamed paper and a heat-insulating container such as cup comprising it.

BACKGROUND ART

Heretofore, as a heat-insulating container, much used are foamed products of synthetic resin. As a container that is easy to dispose of and has good printability, there are known a heat-insulating paper container comprising a plurality of sheets of paper, as well as a paper container formed of a material of a paper base both sides of which are covered with a polyethylene resin layer and in which the polyethylene resin layer on the surface side is foamed to make it insulative to heat.

As a technique of using paper as a substrate, there is known a technique of producing a foamed paper having an irregular embossed pattern on the surface thereof, which comprises extrusion-laminating polyethylene on at least one side of paper and forming a vapor pressure-retaining layer on the other side thereof followed by heating it (for example, see Patent Reference 1). On the other hand, proposed is a technique of forming a foamed heat-insulating layer by providing a thermoplastic resin film on the wall surface on one side of a body part by lamination or coating, followed by heating it to foam the film (for example, see Patent Reference 2). Also proposed is a technique of providing a relatively thick foamed layer in a printed part of a paper container composed of a container body part and a bottom part, wherein a part of the outer wall face of the container body part is printed with an organic solvent-containing ink and all the outer wall face of the body part is covered with a thermoplastic synthetic resin film, and the thus constituted paper container is heated, for example. Further proposed is a foamed paper of a laminate that comprises, from the outer face side thereof, at least a foamed layer composed of an ethylene-$\alpha$-olefin copolymer produced through polymerization with a single-site catalyst of containing it, a paper-based substrate layer, and a thermoplastic resin layer (for example, see Patent References 4, 5). The thus-obtained, converted papers having a foamed layer have, when formed into containers, advantages in that they fit comfortably in hand and hardly slip owing to the foamed layer thereof, they are excellent in heat insulation, and, as compared with heat-insulating containers comprising plural sheets of paper, they are inexpensive.

Patent Reference 6 shows a body part material sheet for paper containers, in which at least one side of the paper substrate of the sheet is extrusion-laminated with a thermoplastic resin in such a manner that the resin in a molten state takes a period of time of from 0.11 to 0.33 seconds from the T-die to the paper substrate, and this describes a composition prepared by mixing two types of low-density polyethylene to have a controlled MFR.

However, it could not be said that the existing, foamed layer-having laminates and foamed papers comprising the laminate could have a sufficient foaming degree, and it is desired to further develop the foamability. In case where MFR is increased so as to improve the foamability, there occur some problems in that the outward appearance of the foamed layer may worsen or the workability in extrusion lamination may be unstable.

Patent Reference 1: JP-B 48-32283

Patent Reference 2: JP-A 57-110439

Patent Reference 3 : JP-A 7-232774

Patent Reference 4: JP-A 10-128928

Patent Reference 5: JP-A 2007-168178

Patent Reference 6: JP-A 2008-105747

DISCLOSURE OF THE INVENTION

PROBLEMS THAT THE INVENTION IS TO SOLVE

An object of the invention is, in consideration of the above-mentioned problems, to provide a resin for foamable laminate which, upon heating, gives foamed cells having a sufficient height (foamed layer), a foamable laminate, and a foamed paper and a heat-insulating container such as cup comprising it.

MEANS FOR SOLVING THE PROBLEMS

The present inventors have assiduously studied for the purpose of solving the above-mentioned problems and, as a result, have found that a laminate produced by forming, on one side of a paper-base substrate, at least one layer (A) of a polyolefin resin having a specific melt flow rate (MFR) and a specific density and having a specific relationship between MFR and memory effect (ME) thereof, and forming, on the other side of the substrate, a layer (B) of a thermoplastic resin having a specific melting point for retaining the vapor released from the substrate is excellent in foamability, and when the layer (A) is heated, it gives a foamed paper having a good appearance of the foamed layer, and have completed the invention.

Specifically, the first aspect of the invention relates to the use of a resin (a) for forming a foamable resin layer (A) to be provided on at least one side of a paper-base substrate and which is characterized by containing a polyolefin resin having the following properties (A1) to (A3):

(A1) the MFR is from 3 to 40 g/10 min,
(A2) the density is at least 0.880 g/cm$^3$,
(A3) the MFR and the memory effect (ME) satisfy the following relational formula (formula 1):

$$-0.467 \times Ln(MFR) + 2.93 \leq ME \qquad (\text{formula } 1)$$

(wherein Ln is a natural logarithm).

The second aspect of the invention relates to the use of the resin of the first aspect of the invention, wherein the polyolefin resin is a polyethylene resin prepared by adding a radical generator to a high-pressure radical polymerization process low-density polyethylene and melt-kneading it at a radical reaction temperature shown by the following relational formula (formula 2):

$$T_{60} + 30 < T(2) < T_{60} + 120 \quad (\text{formula } 2)$$

(wherein T(2) is a radical reaction temperature [°C], $T_{60}$ is a one-hour half-life temperature [°C] of the radical generator).

The third aspect of the invention relates to the use of the resin (a-2) of the first aspect of the invention, wherein the polyolefin resin is a polyethylene resin composition (c) that contains from 10 to 90% by weight of a high-pressure radical process low-density polyethylene resin (a) satisfying the following properties (a1) to (a3) and from 10 to 90% by weight of a high-pressure radical process low-density polyethylene (b) except the resin (a) and satisfying the following properties (b1) and (b2), and satisfies the following properties (c1) to (c3):

(a1) the MFR(a) as measured according to JIS K7210 is from 0.1 to 30 g/10 min,
(a2) the density as measured according to JIS K7112 at a test temperature of 23°C is from 0.905 to 0.940 g/cm$^3$,
(a3) the memory effect (ME) as measured using a melt indexer used in JIS K7210 and under a test condition of a cylinder temperature of 240°C and a constant-rate throughput flow of 3 g/min, is at least 1.7,
(b1) the MFR(b) as measured according to JIS K7210 is from 2 to 70 g/10 min,
(b2) the density as measured according to JIS K7112 at a test temperature of 23°C is from 0.905 to 0.940 g/cm$^3$,
(c1) the MFR(c) as measured according to JIS K7210 is from 0.1 to 30 g/10 min,
(c2) the density as measured according to JIS K7112 at a test temperature of 23°C is from 0.905 to 0.940 g/cm$^3$,
(c3) the memory effect (ME) as measured under the same condition as that for (a3) is at least 1.5.

The fourth aspect of the invention relates to the use of the resin of the first aspect of the invention, wherein the polyolefin resin is a polyethylene resin composition prepared by adding a radical generator to a polyethylene resin composition (c) that contains from 10 to 90% by weight of a high-pressure radical process low-density polyethylene resin (a) satisfying the following properties (a1) to (a3) and from 10 to 90% by weight of a high-pressure radical process low-density polyethylene (b) except the resin (a) and satisfying the following properties (b1) and (b2), and melt-kneading it at a radical reaction temperature shown by the following relational formula (formula 2):

$$T_{60} + 30 < T(2) < T_{60} + 120 \qquad \text{(formula 2)}$$

(wherein T(2) is a radical reaction temperature [°C], $T_{60}$ is a one-hour half-life temperature [°C] of the radical generator),

(a1) the MFR(a) as measured according to JIS K7210 is from 0.1 to 30 g/10 min, (a2) the density as measured according to JIS K7112 at a test temperature of 23°C is from 0.905 to 0.940 g/cm³,

(a3) the memory effect (ME) as measured using a melt indexer used in JIS K7210 and under a test condition of a cylinder temperature of 240°C and a constant-rate throughput flow of 3 g/min, is at least 1.7,

(b1) the MFR(b) as measured according to JIS K7210 is from 2 to 70 g/10 min, (b2) the density as measured according to JIS K7112 at a test temperature of 23°C is from 0.905 to 0.940 g/cm³.

Further, the fifth aspect of the invention relates to the use of the resin of the first aspect of the invention, wherein the polyolefin resin is a polyethylene resin composition (c) that comprises from 10 to 90% by weight of a polyethylene resin (a) prepared by adding a radical generator to a high-pressure radical polymerization process low-density polyethylene and melt-kneading it at a radical reaction temperature shown by the following relational formula (formula 2), and from 10 to 90% by weight of at least one polyethylene resin (b) selected from a high-pressure radical polymerization process low-density polyethylene, and an ethylene/α-olefin copolymer:

$$T_{60} + 30 < T(2) < T_{60} + 120 \qquad \text{(formula 2)}$$

(wherein T(2) is a radical reaction temperature [°C], $T_{60}$ is a one-hour half-life temperature [°C] of the radical generator).

Also, the sixth aspect of the invention relates to the use of the resin of the first aspect of the invention, wherein the polyolefin resin is one prepared by adding a radical generator to a polyethylene resin composition (c) that comprises from 10 to 90% by weight of a high-pressure radical polymerization process low-density polyethylene resin (a) and from 10 to 90% by weight of an ethylene/α-olefin copolymer (b), and melt-kneading it at a radical reaction temperature shown by the following relational formula (formula 2):

$$T_{60} + 30 < T(2) < T_{60} + 120 \qquad \text{(formula 2)}$$

(wherein T(2) is a radical reaction temperature [°C], $T_{60}$ is a one-hour half-life temperature [°C] of the radical generator).

Further, the seventh aspect of the invention relates to the use of the resin of the first aspect of the invention, wherein the polyolefin resin is a polyethylene resin composition (c) that comprises from 10 to 90% by weight of a high-pressure radical polymerization process low-density polyethylene (a) and from 10 to 90% by weight of a long-chain branch-having ethylene/α-olefin copolymer (b).

Also, according to the eighth aspect of the invention, there is provided a foamable laminate having, provided on one side of a paper-base substrate, a foamable resin layer (A) that contains the resin for forming a foamable resin layer (A) as defined in any of the first to seventh aspects of the invention, and having, on the other side of the substrate, a thermoplastic resin layer (B) that retains the vapor released from the substrate, wherein the thermoplastic resin layer (B) contains a thermoplastic resin (B) having the following property:

the melting point (Tm(B)) is from 100 to 140°C.

Further, according to the ninth aspect of the invention, there is provided the foamable laminate of the eighth aspect of the invention, wherein the melting point of the polyolefin resin of the resin for forming a foamable resin layer (A) (Tm(A)) and the melting point of the thermoplastic resin (B) (Tm(B)) satisfy the following relational formula (formula 4):

$$Tm(B) - Tm(A) \geq 10 \qquad \text{(formula 4)}.$$

On the other hand, according to the tenth aspect of the invention, there is provided a foamed paper produced by heating the foamable laminate of the eighth or ninth aspect of the invention and foaming the foamable resin layer (A).

Further, according to the eleventh aspect of the invention, there is provided the foamed paper of the tenth aspect of the invention, wherein the height of the foamed cells formed by foaming the foamable resin layer (A) is at least 370 μm.

On the other hand, according to the twelfth aspect of the invention, there is provided a heat-insulating container produced by forming the foamable laminate of the eighth or ninth aspect of the invention into a container and heating the container to foam the foamable resin layer (A).

ADVANTAGE OF THE INVENTION

The resin used for forming a foamable laminate of the invention has good workability in extrusion lamination and can reduce working loss, therefore giving a foamable laminate having a foamable layer that has a high expansion ratio and can form uniform foamed cells, at high speed and with good producibility.

According to the invention, the foamable laminate having, on one side of a paper-base substrate, a foamable resin layer (A) comprising a specific polyolefin resin (A), and having, on the other side of the substrate, a thermoplastic resin layer (B) capable of retaining the vapor released from the substrate is excellent in foamability, and by heating the foamable resin layer (A), a foamed paper and a heat-insulating container having a good outward appearance of the foamed layer therein can be produced with ease.

BRIEF DESCRIPTION OF THE DRAWINGS

[Fig. 1] This is a view showing a time-elongation viscosity curve (double logarithmic chart) of an ethylene (co)polymer in the invention.
[Fig. 2] This is a view showing a time-elongation viscosity curve (double logarithmic chart) of an ethylene (co)polymer with no strain hardening.

BEST MODE FOR CARRYING OUT THE INVENTION

The resin for forming a foamable resin layer (A), the foamable laminate, and the foamed paper and the heat-insulating container comprising it of the invention are described individually and in detail hereinunder.

In this description, foamability means to indicate the property of foaming under heat. Good foamability means to indicate essentially a state capable of attaining a high expansion ratio, and the height of the foamed cells growing in the thickness direction of the laminate by the vapor from the paper substrate is a measure of it. In addition, the uniformity of the height of the foamed cells is also a measure of it.

1. Resin for foamable laminate

The resin (A) to form the foamable resin layer (A) for use in the invention is a polyolefin resin having the following properties (A1) to (A3):

(A1) the MFR is from 3 to 40 g/10 min,
(A2) the density is at least 0.880 g/cm$^3$,
(A3) the MFR and the memory effect (ME) satisfy the following relational formula 1:

$$-0.467 \times \mathrm{Ln(MFR)} + 2.93 \leq \mathrm{ME} \qquad \text{(formula 1)}$$

(wherein Ln is a natural logarithm).

In the invention, examples of the polyolefin resin (A) include polyolefins such as ethylene homopolymer, ethylene/$\alpha$-olefin copolymer, high-pressure radical polymerization process low-density polyethylene, ethylene copolymer, polypropylene, etc.; and their blends.

Of those, preferred are high-pressure radical polymerization process low-density polyethylene, and a resin composition containing high-pressure radical polymerization process low-density polyethylene.

(A1) MFR

The MFR of the polyolefin resin (A) to form the foamable resin layer (A) for use in the invention is from 3 to 40 g/10 mm, preferably from 5 to 30. When the MFR is less than 1 g/10 min, then the foamed cells could not grow large;

but on the other hand, when it is more than 50 g/10 min, then the cells may break unfavorably.

Unless otherwise specifically indicated, the MFR in the invention is a value measured according to JIS-K7210 (190°C, under a load of 21.18 N).

(A2) Density

The density of the polyolefin resin (A) to form the foamable resin layer (A) for use in the invention is at least 0.880 g/cm$^3$, preferably from 0.885 to 0.930, more preferably from 0.890 to 0.925. When the density is less than 0.880 g/cm$^3$, then the resin layer could slip poorly, and its handlability is unfavorably poor.

Unless otherwise specifically indicated, the density in the invention is a value measured according to JIS K7112 (test temperature 23°C).

(A3) Relationship between MFR and ME:

The relationship between MFR and ME of the polyolefin resin (A) to form the foamable resin layer (A) for use in the invention satisfies the following formula (1):

$$-0.467 \times \mathrm{Ln(MFR)} + 2.93 \leq \mathrm{ME} \qquad (\text{formula } 1)$$

(wherein Ln is a natural logarithm).

Preferably, it satisfies the following:

$$-0.467 \times \mathrm{Ln(MFR)} + 2.95 \leq \mathrm{ME}$$

More preferably, it satisfies the following:

$$-0.467 \times \mathrm{Ln(MFR)} + 2.97 \leq \mathrm{ME}$$

When ME is less than -0.467 x Ln(MFR) + 2.93, then the height of the foamed cells could not increase, and the neck-in in working for extrusion lamination may increase and the workability may be unfavorably unstable.

Unless otherwise specifically indicated, the ME in the invention is measured, using a melt indexer (Misuzu Erie's semiautomatic ME meter) used in JIS K7210 and under a test condition of a cylinder temperature of 240°C and a constant-rate throughput flow of 3 g/min, in the manner mentioned below.

A 2.095 mm$\phi$ nozzle for MFR measurement is set in a device, and a resin is filled into a furnace. A piston is put on it, then this is kept for constant-rate extrusion at 0.09 g/min for 5 minutes, then kept for constant-rate extrusion at 3 g/min and degassed up to 6 minutes and 30 seconds. After 6 minutes and 30 seconds, the strand is cut while still kept at 3 g/min; and at the time when the strand length from the lower end of the orifice has reached 20 mm, the diameter of the strand is measured at the position of 15 mm from the lower end of the orifice, using KEYENCE's laser sizer (LS-3033). The measured diameter of the strand is represented by D, and the orifice diameter of the die is by Do (2.095 mm), and ME is computed according to the following formula:

$$\mathrm{ME} = D/D_0$$

The ME of the polyolefin resin (A) is preferably from 1.5 to 3.0, more preferably from 1.6 to 2.8. When the ME falls within the above range, then the height of the foamed cells could be on a sufficient level, and the neck-in in working for extrusion lamination does not increase, and therefore the workability could be stable.

The melting point of the polyolefin resin (A) is preferably from 80 to 120°C, more preferably from 90 to 110°C. When the melting point falls within the above range, then the height of the foamed cells could be controlled suitably.

Within a range not detracting from the properties of the polyolefin resin, any other thermoplastic resin may be incorporated in the polyolefin resin. The thermoplastic resin includes any other polyolefin resin, polyester resin, vinyl chloride resin, polystyrene resin, etc.

The polyolefin resin (A) to constitute the foamable resin layer (A) for use in the invention is not specifically defined so far as it satisfies the above-mentioned properties, but is preferably any one selected from the following (A-1) to (A-6):

(A-1) A polyethylene resin prepared by adding a radical generator to a high-pressure radical polymerization process low-density polyethylene (a) and melt-kneading it at a radical reaction temperature represented by the following relational formula (formula 2):

$$T_{60} + 30 < T(2) < T_{60} + 120 \qquad \text{(formula 2)}$$

(wherein T(2) is a radical reaction temperature [°C], $T_{60}$ is a one-hour half-life temperature [°C] of the radical generator).

(A-2) A polyethylene resin composition (c) that contains from 10 to 90% by weight of a high-pressure radical process low-density polyethylene resin (a) satisfying the following properties (a1) to (a3) and from 10 to 90% by weight of a high-pressure radical process low-density polyethylene (b) except the resin (a) and satisfying the following properties (b1) and (b2), and satisfies the following properties (c1) to (c3):

(a1) the MFR(a) as measured according to JIS K7210 is from 0.1 to 30 g/10 min,
(a2) the density as measured according to JIS K7112 at a test temperature of 23°C is from 0.905 to 0.940 g/cm$^3$,
(a3) the memory effect (ME) as measured using a melt indexer used in JIS K7210 and under a test condition of a cylinder temperature of 240°C and a constant-rate throughput flow of 3 g/min, is at least 1.7,
(b1) the MFR(b) as measured according to JIS K7210 is from 2 to 70 g/10 min, (b2) the density as measured according to JIS K7112 at a test temperature of 23°C is from 0.905 to 0.940 g/cm$^3$,
(c1) the MFR(c) as measured according to JIS K7210 is from 0.1 to 30 g/10 min, (c2) the density as measured according to JIS K7112 at a test temperature of 23°C is from 0.905 to 0.940 g/cm$^3$,
(c3) the memory effect (ME) as measured under the same condition as that for (a3) is at least 1.5.

(A-3) A polyethylene resin composition prepared by adding a radical generator to a polyethylene resin composition (c) that contains from 10 to 90% by weight of a high-pressure radical process low-density polyethylene resin (a) satisfying the following properties (a1) to (a3) and from 10 to 90% by weight of a high-pressure radical process low-density polyethylene (b) except the resin (a) and satisfying the following properties (b1) and (b2), and melt-kneading it at a radical reaction temperature shown by the following relational formula (formula 2):

$$T_{60} + 30 < T(2) < T_{60} + 120 \qquad \text{(formula 2)}$$

(wherein T(2) is a radical reaction temperature [°C], $T_{60}$ is a one-hour half-life temperature [°C] of the radical generator),

(a1) the MFR(a) as measured according to JIS K7210 is from 0.1 to 30 g/10 min, (a2) the density as measured according to JIS K7112 at a test temperature of 23°C is from 0.905 to 0.940 g/cm$^3$,
(a3) the memory effect (ME) as measured using a melt indexer used in JIS K7210 and under a test condition of a cylinder temperature of 240°C and a constant-rate throughput flow of 3 g/min, is at least 1.7,
(b1) the MFR(b) as measured according to JIS K7210 is from 2 to 70 g/10 min, (b2) the density as measured according to JIS K7112 at a test temperature of 23°C is from 0.905 to 0.940 g/cm$^3$.

(A-4) A polyethylene resin composition (c) that comprises from 10 to 90% by weight of a polyethylene resin (a) prepared by adding a radical generator to a high-pressure radical polymerization process low-density polyethylene and melt-kneading it at a radical reaction temperature shown by the following relational formula (formula 2), and from 10 to 90% by weight of at least one polyethylene resin (b) selected from a high-pressure radical polymerization process low-density polyethylene, and an ethylene/α-olefin copolymer:

$$T_{60} + 30 < T(2) < T_{60} + 120 \qquad \text{(formula 2)}$$

(wherein T(2) is a radical reaction temperature [°C], $T_{60}$ is a one-hour half-life temperature [°C] of the radical generator).

(A-5) One prepared by adding a radical generator to a polyethylene resin composition (c) that comprises from 10 to 90% by weight of a high-pressure radical polymerization process low-density polyethylene resin (a) and from 10 to 90% by weight of an ethylene/$\alpha$-olefin copolymer (b), and melt-kneading it at a radical reaction temperature shown by the following relational formula (formula 2):

$$T_{60} + 30 < T(2) < T_{60} + 120 \qquad \text{(formula 2)}$$

(wherein T(2) is a radical reaction temperature [°C], $T_{60}$ is a one-hour half-life temperature [°C] of the radical generator).

(A-6) A polyethylene resin composition (c) that comprises from 10 to 90% by weight of a high-pressure radical polymerization process low-density polyethylene (a) and from 10 to 90% by weight of a long-chain branch-having ethylene/$\alpha$-olefin copolymer (b).

The above (A-1) to (A-6) are described individually in detail hereinunder.

(A-1) One preferred embodiment of the polyolefin resin used in the invention is a polyethylene resin prepared by adding a radical generator to a high-pressure radical polymerization process low-density polyethylene (a) and melt-kneading it at a radical reaction temperature shown by the following relational formula (formula 2):

$$T_{60} + 30 < T(2) < T_{60} + 120 \quad \text{(formula 2)}$$

(wherein T(2) is a radical reaction temperature [°C], $T_{60}$ is a one-hour half-life temperature [°C] of the radical generator).

The high-pressure radical polymerization process low-density polyethylene can be produced through radical polymerization of ethylene under the following condition.

(i) Polymerization condition:

The high-pressure radical polymerization process used in the invention is a process of bulk or solution polymerization of ethylene in the presence of a radical initiator such as oxygen, organic peroxide or the like under ultrahigh pressure.

The polymerization temperature is within a range of from 100 to 300°C, preferably from 120 to 280°C, more preferably from 150 to 250°C. When the polymerization temperature is lower than 100°C, then the yield may lower and a stable product could not be produced; but when higher than 300°C, then the reaction could not be stable and a polymer having a large molecular weight would be difficult to produce. The polymerization pressure is within a range of from 50 to 400 MPa, preferably from 70 to 350 MPa, more preferably from 100 to 300 MPa. When the polymerization pressure is lower than 50 MPa, then a product having a sufficient molecular weight could not be produced, and the workability and the physical properties of the product may worsen; but when higher than 400 MPa, then stable production operation would be difficult.

(ii) Polymerization operation:

In production, basically, ordinary equipment and technique for production of high-pressure radical process low-density polyethylene may be utilized. Regarding the type of the reactor, usable are stirring blade-equipped autoclave-type reactors or tubular reactors; and if desired, a plurality of reactors may be connected in series or in parallel for multi-stage polymerization. Further, in case where an autoclave-type reactor is used, the inside area of the reactor may be partitioned into plural zones, in which a temperature profile may be provided or a severe temperature control may be set. According to the operation, the memory effect and others can be controlled.

The radical generator to be added to the high-pressure radical polymerization process low-density polyethylene (a) includes organic peroxides, dihydroaromatics, dicumyl compounds, etc. The organic peroxides include, for example, (i) hydroperoxides such as t-butyl hydroperoxide, cumene hydroperoxide, 1,1,3,3-tetramethylbutyl hydroperoxide, etc.; (ii) ketone peroxides such as methyl ethyl ketone peroxide, methyl isobutyl ketone peroxide, acetylacetone peroxide, cyclohexanone peroxide, etc.; (iii) diacyl peroxides such as isobutyryl peroxide, lauroyl peroxide, benzoyl peroxide, etc.; (iv) dialkyl peroxides such as dicumyl peroxide, 2,5-dimethyl-2,5-di(t-butylperoxy)hexane, t-butylcumyl peroxide, di-t-butyl peroxide, 2,5-dimethyl-2,5-di-(t-butylhexyne)-3, di-t-amyl peroxide, etc.; (v) peroxyketals such as 2,2-di-(t-butylperoxy)butane, etc.; (vi) alkyl peresters such as t-hexylperoxy pivalate, t-butylperoxy pivalate, t-amylperoxy 2-ethylhexanoate, t-butylperoxy 2-ethylhexanoate, t-butylperoxy isobutyrate, t-butylperoxy benzoate, etc.; (vii) percarbonates such as bis(4-t-butylcyclohexyl)peroxy dicarbonate, diisopropylperoxy dicarbonate, t-amylperoxyisopropyl carbonate, etc.; (viii) cyclic organic peroxides such as 3,6,9-triethyl-3,6,9-trimethyl-1,4,7-triperoxonan, etc. Above all, preferred are cyclic organic peroxides.

Not specifically defined, the amount of the organic peroxide to be added is preferably at most 0.5 parts by weight per 100 parts by weight of the polyolefin resin, more preferably at most 0.1 parts by weight. When the amount of the organic peroxide added is more than 0.5 parts by weight, then the flowability may worsen.

For the radical reaction, preferred is a melt reaction method of simultaneously melt-kneading and reacting a resin and a radical generator in an extruder, or a solution reaction method of dissolving a resin and a radical generator in an organic solvent and reacting them with mixing and stirring under heat.

Preferably, the radical reaction temperature [T(2)](°C) satisfies the following relational formula (2), more preferably relational formula (2)':

Relational formula (2):

$$T_{60} + 30 < T(2) < T_{60} + 120$$

Formula (2)

Relational formula (2)':

$$T_{60} + 40 < T(2) < T_{60} + 110$$

Formula (2)'

(wherein $T_{60}$ is a one-hour half-life temperature [°C] of the radical generator).

It is necessary to quantitatively blend the resin and the radical generator prior to the radical reaction. For this, employable is a method of feeding a resin and a radical generator to a radical reactor with metering them with a volumetric feeder; a method of dry-blending a resin and a radical generator by the use of a mixing device such as a tumbler mixer a Henschel mixer or the like, and then feeing the blend to a radical reactor; a method of dry-blending followed by melt-blending them in an extruder, and feeding them into a radical reactor; a method of quantitatively feeding a resin and a radical generator into an extruder, melt-blending them therein, and feeding them to a radical reactor; etc.

For the melt blending, employable is a method of melt-blending all the resin and the radical generator necessary for the radical reaction; a method of melt-blending all the radical generator and a part of the resin, and further blending them for dilution at the time of radical reaction; etc. Preferred is the method of melt-blending all the resin and the radical generator necessary for the radical reaction.

The melt blending is for fully dispersing the radical generator in the resin at the controlled radical reaction temperature. For this, it is important to select the kneading temperature at which the radical reaction can be controlled. In the invention, the kneading temperature [T(1)](°C) preferably satisfies the following formula (3):

$$Tm < T(1) < T_{60} + 5 \qquad (3)$$

As in melt, the kneading at a temperature lower than the melting point (Tm) of the resin is substantially impossible. When the kneading temperature is higher than the uppermost limit of the above formula (3), it is unfavorable since a measurable amount of the radical generator may decompose. In addition, since the decomposition speed of the radical generator is higher at a higher temperature, it is desirable that the kneading is at a temperature as low as possible for melt-blending not initiating radical reaction; and more preferred is the following relational formula (3)':

$$Tm < T(1) < T_{60} - 3 \qquad (3)'$$

One preferred embodiment of the method for producing the polyolefin resin (a) for the invention may be a method including a step of melt-kneading a polyolefin resin and a radical generator at a temperature T(2) satisfying the above-mentioned relational formula (2) or (2)'; or as another preferred embodiment, employable is a method that comprises a first step of melt-kneading a polyolefin resin and a radical generator at a temperature T(1) satisfying the above-mentioned relational formula (3) or (3)' followed by a second step of melt-kneading the product in the first step, at a temperature T(2) satisfying the above-mentioned relational formula (2) or (2)'.

For the radical reaction, preferred is a melt reaction method of simultaneously melt-kneading and reacting the resin and the radical generator in an extruder, or a solution reaction method of dissolving the resin and the radical generator in an organic solvent and reacting them with mixing and stirring under heat.

Preferably, the MFR and the memory effect (ME) of the polyethylene resin (a-1) for use in the invention satisfy the following relational formula:

$$-0.467 \times \mathrm{Ln(MFR)} + 3.20 \leq \mathrm{ME}$$

(wherein Ln is a natural logarithm).

More preferably, they satisfy the following relational formula:

$$-0.467 \times \mathrm{Ln(MFR)} + 3.22 \leq \mathrm{ME}$$

Even more preferably, they satisfy the following relational formula:

$$-0.467 \times \mathrm{Ln(MFR)} + 3.24 \leq \mathrm{ME}$$

(A-2) One preferred embodiment of the polyolefin resin used in the invention is a polyethylene resin composition (c) that contains from 10 to 90% by weight of a high-pressure radical process low-density polyethylene resin (a) satisfying the following properties (a1) to (a3) and from 10 to 90% by weight of a high-pressure radical process low-density polyethylene (b) except the resin (a) and satisfying the following properties (b1) and (b2), and satisfies the following properties (c1) to (c3):

(a1) the MFR(a) as measured according to JIS K7210 is from 0.1 to 30 g/10 min, (a2) the density as measured according to JIS K7112 at a test temperature of 23°C is from 0.905 to 0.940 g/cm$^3$,
(a3) the memory effect (ME) as measured using a melt indexer used in JIS K7210 and under a test condition of a cylinder temperature of 240°C and a constant-rate throughput flow of 3 g/min, is at least 1.7,
(b1) the MFR(b) as measured according to JIS K7210 is from 2 to 70 g/10 min, (b2) the density as measured according to JIS K7112 at a test temperature of 23°C is from 0.905 to 0.940 g/cm$^3$,
(c1) the MFR(c) as measured according to JIS K7210 is from 0.1 to 30 g/10 min, (c2) the density as measured according to JIS K7112 at a test temperature of 23°C is from 0.905 to 0.940 g/cm$^3$,
(c3) the memory effect (ME) as measured under the same condition as that for (a3) is at least 1.5.

High-pressure radical process low-density polyethylene resin (a):

The high-pressure radical process low-density polyethylene (a) is a high-pressure radical process low-density polyethylene that satisfies the following: (a1) the MFR(a) as measured according to JIS K7210 (at 190°C under a load of 21.18 N) is from 0.1 to 30 g/10 min, (a2) the density as measured according to JIS K7112 at a test temperature of 23°C is from 0.905 to 0.940 g/cm$^3$, and (a3) the memory effect (ME) as measured using a melt indexer used in JIS K7210 and under a test condition of a cylinder temperature of 240°C and a constant-rate throughput flow of 3 g/min, is at least 1.7.

The melt flow rate (MFR) of the high-pressure radical process low-density polyethylene resin (a), MFR(a) is from 0.1 to 30 g/10 min, preferably from 0.3 to 28, more preferably from 0.5 to 25. When the MFR(a) is less than 0.1 g/10 min, the high-speed workability in extrusion lamination may be poor. On the other hand, those with more than 30 g/10 min may be poor in the working stability in extrusion lamination.

The density of the high-pressure radical process low-density polyethylene resin (a) is within a range of from 0.905 to 0.940 g/cm$^3$, preferably from 0.907 to 0.937, more preferably from 0.910 to 0.935. When the density is less than 0.905 g/cm$^3$, then the resin for lamination may be poor in the slidability and the handling thereof may be bad. Those with a density of more than 0.940 g/cm$^3$ will be difficult to produce industrially.

The memory effect of the high-pressure radical process low-density polyethylene resin (a) is at least 1.7, preferably at least 1.8, more preferably at least 1.9, most preferably at least 2.0. When the memory effect is less than 1.7, it is unfavorable for the following reasons: The formulation range in preparing the polyethylene composition (c) may be limited as will be described hereinunder, neck-in in working for extrusion lamination may increase, therefore causing a factor of instability in working, and in addition, the expansion ratio could not be expected to increase and uniform foamed cells could not be obtained.

[Polymerization method]

The high-pressure radical process low-density polyethylene resin (a) used in the invention can be produced according to the same method as that mentioned above.

High-pressure radical process low-density polyethylene resin (b):

The high-pressure radical process low-density polyethylene resin (b) differs from the high-pressure radical process low-density polyethylene resin (a), and satisfies the following: (b1) The melt flow rate (MFR(b)) as measured according to JIS K7210 (at 190°C and under a load of 21.18 N) is from 2 to 70 g/10 min, and (b2) the density as measured according to JIS K7112 at a test temperature of 23°C is from 0.905 to 0.940 g/cm$^3$. The production method for it is the same as that for the above-mentioned high-pressure radical process low-density polyethylene resin (a), and the resin is produced with suitably varying the polymerization condition so that its properties can satisfy the above.

The MFR(b) of the high-pressure radical process low-density polyethylene resin (b) is within a range of from 2 to 70 g/10 min, preferably from 3 to 65, more preferably from 4 to 60. The high-pressure radical process low-density polyethylene resin (b) can be said to be an ingredient for improving the MFR of the high-pressure radical process low-density polyethylene resin (a); and when the MFR(b) is less than 2 g/10 min, it is unfavorable since the high-speed workability in extrusion lamination may be poor. On the other hand, those with MFR(b) of more than 70 g/10 min are unfavorable as they may have a risk of instability in extrusion lamination.

The density of the high-pressure radical process low-density polyethylene resin (b) is within a range of from 0.905 to 0.940 g/cm$^3$, preferably from 0.907 to 0.937, more preferably from 0.910 to 0.935. When the density is less than 0.905 g/cm$^3$, then it is unfavorable since the resin for lamination may be poor in the slidability and the handling thereof may be bad. Those with a density of more than 0.940 g/cm$^3$ will be difficult to produce industrially.

Polyethylene resin composition (c):

The polyethylene resin composition (c) used in the invention is a mixture of from 10 to 90% by weight of the above-mentioned high-pressure radical process low-density polyethylene resin (a) and from 10 to 90% by weight of the high-pressure radical process low-density polyethylene (b), and satisfies the following: (c1) The MFR(c) as measured according to JIS K7210 (at 290°C under a load of 21.18N) is from 0.1 to 30 g/10 min, (c2) the density as measured according to JIS K7112 at a test temperature of 23°C is from 0.905 to 0.940 g/cm$^3$, and (c3) the memory effect (ME) is at least 1.5.

The MFR(c) of the polyethylene resin composition (c) is from 0.1 to 30 g/10 min, preferably from 0.3 to 28, more preferably from 0.5 to 25. When the MFR(c) is less than 0.1 g/10 min, then the high-speed workability in extrusion lamination may be poor and there is a possibility that the foamed cells could not grow large. Those with MFR(c) of more than 30 g/10 min may have poor working stability in extrusion lamination and the foamed cells may be broken.

The density of the polyethylene resin composition (c) is within a range of from 0.905 to 0.940 g/cm$^3$, preferably from 0.907 to 0.937, more preferably from 0.910 to 0.935. When the density is less than 0.905 g/cm$^3$, then it is unfavorable since the resin for lamination may be poor in the slidability and the handling thereof may be bad. Those with a density of more than 0.940 g/cm$^3$ will be difficult to produce industrially.

The memory effect (ME) of the polyethylene resin composition (c) is at least 1.5, preferably at least 1.6, more preferably at least 1.7. When the ME falls within the range, then the height of the foamed cells may be sufficient and the neck-in in working for lamination may not increase, and therefore the workability may be stable. In particular, when the memory effect (ME) is less than 1.5, the foamed cells could not be sufficiently high and uniform foamed cells could not be formed.

[Blend ratio of resin (a) and resin (b)]

The blend ratio of the above-mentioned high-pressure radical process low-density polyethylene resin (a) and the high-pressure radical process low-density polyethylene resin (b) is within a range of from 10 to 90% by weight of (a) to from 10 to 90% by weight of (b), preferably from 15 to 85% by weight of (a)/from 85 to 15% by weight of (b), more preferably from 20 to 80% by weight of (a)/from 80 to 20% by weight of (b).

When the resin (a) is less than 10% by weight and the resin (b) is more than 90% by weight, or when the resin (a) is more than 90% by weight and the resin (b) is less than 10% by weight, then it is unfavorable as bringing about some disadvantages that the properties of the polyethylene resin composition (c) could not be controlled, and consequently there occur other disadvantages that the neck-in in extrusion lamination may increase and the stability in working may worsen.

In the invention, preferably, the high-pressure radical process low-density polyethylene resin (a) and the high-pressure radical process low-density polyethylene resin (b) are so combined that the MFR(a) and the MFR(b) satisfy the following relational formula (1), more preferably the formula (1-1), even more preferably the formula (1-2):

$$MFR(b)/MFR(a) > 1 \qquad \text{Formula (1)}$$

$$MFR(b)/MFR(a) > 2 \qquad \text{Formula (1-1)}$$

$$MFR(b)/MFR(a) > 2.5 \qquad \text{Formula (1-2)}$$

In particular, preferably, the high-pressure radical process low-density polyethylene resin (a) has a lower MFR and a higher ME than the high-pressure radical process low-density polyethylene resin (b); and the high-pressure radical process low-density polyethylene resin (b) has a higher MFR than the high-pressure radical process low-density polyethylene resin (a).

Satisfying the above relationship, the shaping operation in lamination may be smoother, and the loss owing to neck-in could be reduced significantly.

Preferably, the MFR(c) and the memory effect (ME) of the polyethylene resin composition (c) used in the invention satisfy the following formula (2), more preferably the formula (2-1), even more preferably the formula (2-2):

$$-0.467 \times Ln(MFR(c)) + 2.75 \leq ME \qquad \text{Formula (2)}$$

(wherein Ln is a natural logarithm),

$$-0.467 \times Ln(MFR(c)) + 2.77 \leq ME \qquad \text{Formula (2-1),}$$

$$-0.467 \times Ln(MFR(c)) + 2.79 \leq ME \qquad \text{Formula (2-2).}$$

Preferably, the melting point of the polyethylene resin composition (c) used in the invention is selected within a range of from 80 to 120°C, more preferably within a range of from 90 to 110°C; and when the melting point falls within the range, the height of the foamed cells can be suitably controlled.

(A-3) One preferred embodiment of the polyolefin resin used in the invention is a polyethylene resin composition prepared by adding a radical generator to a polyethylene resin composition (c) that contains from 10 to 90% by weight of a high-pressure radical process low-density polyethylene resin (a) satisfying the following properties (a1) to (a3) and from 10 to 90% by weight of a high-pressure radical process low-density polyethylene (b) except the resin (a) and satisfying the following properties (b1) and (b2), and melt-kneading it at a radical reaction temperature shown by the following relational formula (formula 2):

$$T_{60} + 30 < T(2) < T_{60} + 120 \qquad \text{(formula 2)}$$

(wherein T(2) is a radical reaction temperature [°C], $T_{60}$ is a one-hour half-life temperature [°C] of the radical generator),

(a1) the MFR(a) as measured according to JIS K7210 is from 0.1 to 30 g/10 min, (a2) the density as measured according to JIS K7112 at a test temperature of 23°C is from 0.905 to 0.940 g/cm$^3$,

(a3) the memory effect (ME) as measured using a melt indexer used in JIS K7210 and under a test condition of a cylinder temperature of 240°C and a constant-rate throughput flow of 3 g/min, is at least 1.7,

(b1) the MFR(b) as measured according to JIS K7210 is from 2 to 70 g/10 min, (b2) the density as measured according to JIS K7112 at a test temperature of 23°C is from 0.905 to 0.940 g/cm$^3$.

High-pressure radical process low-density polyethylene resin (a):

The high-pressure radical process low-density polyethylene (a) is a high-pressure radical process low-density polyethylene that satisfies the following: (a1) the MFR(a) as measured according to JIS K7210 (at 190°C under a load of 21.18 N) is from 0.1 to 30 g/10 min, (a2) the density as measured according to JIS K7112 at a test temperature of 23°C is from 0.905 to 0.940 g/cm$^3$, and (a3) the memory effect (ME) as measured using a melt indexer used in JIS K7210 and under a test condition of a cylinder temperature of 240°C and a constant-rate throughput flow of 3 g/min, is at least 1.7.

The melt flow rate (MFR) of the high-pressure radical process low-density polyethylene resin (a), MFR(a) is from 0.1 to 30 g/10 min, preferably from 0.3 to 28, more preferably from 0.5 to 25. When the MFR(a) is less than 0.1 g/10 min, the high-speed workability in extrusion lamination may be poor. On the other hand, those with more than 30 g/10 min are unfavorable as they may worsen the working stability in extrusion lamination.

The density of the high-pressure radical process low-density polyethylene resin (a) is within a range of from 0.905 to 0.940 g/cm$^3$, preferably from 0.907 to 0.937, more preferably from 0.910 to 0.935. When the density is less than 0.905 g/cm$^3$, then it is unfavorable since the resin for lamination may be poor in the slidability and the handling thereof may be bad. Those with a density of more than 0.940 g/cm$^3$ will be difficult to produce industrially.

The memory effect of the high-pressure radical process low-density polyethylene resin (a) is at least 1.7, preferably at least 1.8, more preferably at least 1.9, even more preferably at least 2.0.

The high-pressure radical process low-density polyethylene resin (a) may be produced according to the same method as above.

High-pressure radical process low-density polyethylene resin (b):

The high-pressure radical process low-density polyethylene resin (b) differs from the above-mentioned high-pressure radical process low-density polyethylene resin (a), and satisfies the following: (b1) The melt flow rate (MFR(b)) as measured according to JIS K7210 (at 190°C and under a load of 21.18 N) is from 2 to 70 g/10 min, and (b2) the density as measured according to JIS K7112 at a test temperature of 23°C is from 0.905 to 0.940 g/cm$^3$. The production method for it is the same as that for the above-mentioned high-pressure radical process low-density polyethylene resin (a), and the resin is produced with suitably varying the polymerization condition so that its properties can satisfy the above.

The MFR(b) of the high-pressure radical process low-density polyethylene resin (b) is within a range of from 2 to 70 g/10 min, preferably from 3 to 65, more preferably from 4 to 60. The high-pressure radical process low-density polyethylene resin (b) can be said to be an ingredient for improving the MFR of the high-pressure radical process low-density polyethylene resin (a); and when the MFR(b) is less than 2 g/10 min, it is unfavorable since the high-speed workability in extrusion lamination may be poor. On the other hand, those with MFR(b) of more than 70 g/10 min are unfavorable as they may have a risk of instability in extrusion lamination.

The density of the high-pressure radical process low-density polyethylene resin (b) is within a range of from 0.905 to 0.940 g/cm$^3$, preferably from 0.907 to 0.937, more preferably from 0.910 to 0.935. When the density is less than 0.905 g/cm$^3$, then it is unfavorable since the resin for lamination may be poor in the slidability and the handling thereof may be bad. Those with a density of more than 0.940 g/cm$^3$ will be difficult to produce industrially.

Polyethylene resin composition (c):

[Blend ratio of resin (a) and resin (b)]

The blend ratio of the above-mentioned high-pressure radical process low-density polyethylene resin (a) and the high-pressure radical process low-density polyethylene resin (b) is within a range of from 10 to 90% by weight of (a) to from 10 to 90% by weight of (b), preferably from 15 to 85% by weight of (a)/from 85 to 15% by weight of (b), more preferably from 20 to 80% by weight of (a)/from 80 to 20% by weight of (b).

When the resin (a) is less than 10% by weight and the resin (b) is more than 90% by weight, or when the resin (a) is more than 90% by weight and the resin (b) is less than 10% by weight, then it is unfavorable as bringing about some disadvantages that the properties of the polyethylene resin composition (c) could not be controlled, and consequently there occur other disadvantages that the neck-in in extrusion lamination may increase and the stability in working may worsen.

Preferably, the high-pressure radical process low-density polyethylene resin (a) and the high-pressure radical process low-density polyethylene resin (b) are so combined that the MFR(a) and the MFR(b) satisfy the following relational formula (1), more preferably the formula (1-1), even more preferably the formula (1-2):

$$MFR(b)/MFR(a) > 1 \qquad\qquad Formula\ (1)$$

$$MFR(b)/MFR(a) > 2 \qquad\qquad Formula\ (1\text{-}1)$$

$$MFR(b)/MFR(a) > 2.5 \qquad\qquad Formula\ (1\text{-}2)$$

In particular, preferably, the high-pressure radical process low-density polyethylene resin (a) has a lower MFR and a higher ME than the high-pressure radical process low-density polyethylene resin (b); and the high-pressure radical process low-density polyethylene resin (b) has a higher MFR than the high-pressure radical process low-density polyethylene resin (a).

Satisfying the above relationship, the shaping operation in lamination may be smoother, and the loss owing to neck-in could be reduced significantly.

The resin (a-3) for foamable laminates is produced by adding a radical generator to the above polyethylene resin composition (c) and melt-kneading it at a radical reaction temperature shown by the relational formula (formula 2) mentioned below.

The radical generator is the same as that mentioned in the above.

Not specifically defined, the amount of the organic peroxide to be added as the radical generator is preferably 0.5 parts by weight or less per 100 parts by weight of the polyolefin resin composition (C), more preferably 0.1 parts by weight or less. When the amount of the organic peroxide added is more than 0.5 parts by weight, then the flowability may worsen.

For the radical reaction, preferred is a melt reaction method of simultaneously melt-kneading and reacting a resin and a radical generator in an extruder, or a solution reaction method of dissolving a resin and a radical generator in an organic solvent and reacting them with mixing and stirring under heat.

Preferably, the radical reaction temperature [T(2)](°C) satisfies the following relational formula (2), more preferably relational formula (2)':

Relational formula (2):

$$T_{60} + 30 < T(2) < T_{60} + 120 \qquad\qquad Formula\ (2)$$

Relational formula (2)':

$$T_{60} + 40 < T(2) < T_{60} + 110 \qquad\qquad Formula\ (2)'$$

(wherein $T_{60}$ is a one-hour half-life temperature [°C] of the radical generator (C)).

For the melt blending, employable is a method of melt-blending all the resin and the radical generator necessary for the radical reaction; a method of melt-blending all the radical generator and a part of the resin, and further blending them for dilution at the time of radical reaction; etc. Preferred is the method of melt-blending all the resin and the radical generator necessary for the radical reaction.

The melt blending is for fully dispersing the radical generator in the resin at the controlled radical reaction temperature. For this, it is important to select the kneading temperature at which the radical reaction can be controlled. In the invention, the kneading temperature [T(1)](°C) preferably satisfies the following formula (3):

$$Tm < T(1) < T_{60} + 5 \qquad (3)$$

As in melt, the kneading at a temperature lower than the melting point (Tm) of the resin is substantially impossible. When the kneading temperature is higher than the uppermost limit of the above formula (3), it is unfavorable since a measurable amount of the radical generator may decompose. In addition, since the decomposition speed of the radical generator is higher at a higher temperature, it is desirable that the kneading is at a temperature as low as possible for melt-blending not initiating radical reaction; and more preferred is the following relational formula (3)':

$$Tm < T(1) < T_{60} - 3 \qquad (3)'$$

One preferred embodiment of the method for producing the resin (a-3) for foamable laminates may be a method including a step of melt-kneading a polyolefin resin and a radical generator at a temperature T(2) satisfying the above-mentioned relational formula (2) or (2)'; or as another preferred embodiment, employable is a method that comprises a first step of melt-kneading a polyolefin resin and a radical generator at a temperature T(1) satisfying the above-mentioned relational formula (3) or (3)' followed by a second step of melt-kneading the product in the first step, at a temperature T(2) satisfying the above-mentioned relational formula (2) or (2)'.

The MFR(c) of the polyethylene resin composition (A-3) is from 0.1 to 30 g/10 min, preferably from 0.3 to 28, more preferably from 0.5 to 25. When the MFR(c) is less than 0.1 g/10 min, then the high-speed workability in extrusion lamination may be poor and there is a possibility that the foamed cells could not grow large. Those with MFR(c) of more than 30 g/10 min may have poor working stability in extrusion lamination and the foamed cells may be broken.

The density of the polyethylene resin composition (A-3) is within a range of from 0.905 to 0.940 g/cm$^3$, preferably from 0.907 to 0.937, more preferably from 0.910 to 0.935. When the density is less than 0.905 g/cm$^3$, then it is unfavorable since the resin for lamination may be poor in the slidability and the handling thereof may be bad. Those with a density of more than 0.940 g/cm$^3$ will be difficult to produce industrially.

The memory effect (ME) of the polyethylene resin composition (A-3) is at least 1.5, preferably at least 1.6, more preferably at least 1.7. When the ME falls within the range, then the height of the foamed cells may be sufficient and the neck-in in working for lamination may not increase, and therefore the workability may be stable. In particular, when the memory effect (ME) is less than 1.5, the foamed cells could not be sufficiently high and uniform foamed cells could not be formed.

The melting point of the polyethylene resin composition (A-3) is preferably selected within a range of from 80 to 120°C, more preferably within a range of from 90 to 110°C. When the melting point falls within the range, then the height of the foamed cells could be suitably controlled.

(A-4) One preferred embodiment of the polyolefin resin used in the invention is a resin as stated in claim 1, and this is a polyethylene resin composition (c) that comprises from 10 to 90% by weight of a polyethylene resin (a) prepared by adding a radical generator to a high-pressure radical polymerization process low-density polyethylene and melt-kneading it at a radical reaction temperature shown by the following relational formula (formula 2), and from 10 to 90% by weight of at least one polyethylene resin (b) selected from a high-pressure radical polymerization process low-density polyethylene, and an ethylene/α-olefin copolymer:

$$T_{60} + 30 < T(2) < T_{60} + 120 \qquad (formula\ 2)$$

(wherein T(2) is a radical reaction temperature [°C], T$_{60}$ is a one-hour half-life temperature [°C] of the radical generator (c)).

High-pressure radical process low-density polyethylene resin (a):

The high-pressure radical process low-density polyethylene (a) is preferably a high-pressure radical process low-density polyethylene that satisfies the following: (a1) the MFR(a) as measured according to JIS K7210 (at 190°C under a load of 21.18 N) is from 0.1 to 30 g/10 min, (a2) the density as measured according to JIS K7112 at a test temperature of 23°C is from 0.905 to 0.940 g/cm$^3$, and (a3) the memory effect (ME) as measured using a melt indexer used in JIS K7210 and under a test condition of a cylinder temperature of 240°C and a constant-rate throughput flow of 3 g/min, is at least 1.7.

The melt flow rate (MFR) of the high-pressure radical process low-density polyethylene resin (a), MFR(a) is from 0.1 to 30 g/10 min, preferably from 0.3 to 28, more preferably from 0.5 to 25. When the MFR(a) is less than 0.1 g/10 min, the high-speed workability in extrusion lamination may be poor. On the other hand, those with more than 30 g/10 min are unfavorable as they may worsen the working stability in extrusion lamination.

The density of the high-pressure radical process low-density polyethylene resin (a) is within a range of from 0.905 to 0.940 g/cm$^3$, preferably from 0.907 to 0.937, more preferably from 0.910 to 0.935. When the density is less than 0.905 g/cm$^3$, then it is unfavorable since the resin for lamination may be poor in the slidability and the handling thereof may be bad. Those with a density of more than 0.940 g/cm$^3$ will be difficult to produce industrially.

The high-pressure radical process low-density polyethylene resin may be produced according to the same method as above.

For the radical reaction, preferred is a melt reaction method of simultaneously melt-kneading and reacting a resin and a radical generator in an extruder, or a solution reaction method of dissolving a resin and a radical generator in an organic solvent and reacting them with mixing and stirring under heat. Preferably, the radical reaction temperature [T(2)](°C) satisfies the following relational formula (2), more preferably relational formula (2)':

Relational formula (2):

$$T_{60} + 30 < T(2) < T_{60} + 120 \qquad \text{Formula (2)}$$

Relational formula (2)':

$$T_{60} + 40 < T(2) < T_{60} + 110 \qquad \text{Formula (2)'}$$

(wherein $T_{60}$ is a one-hour half-life temperature [°C] of the radical generator).

For the melt blending, employable is a method of melt-blending all the resin and the radical generator necessary for the radical reaction; a method of melt-blending all the radical generator and a part of the resin, and further blending them for dilution at the time of radical reaction; etc. Preferred is the method of melt-blending all the resin and the radical generator necessary for the radical reaction.

The melt blending is for fully dispersing the radical generator in the resin at the controlled radical reaction temperature. For this, it is important to select the kneading temperature at which the radical reaction can be controlled. In the invention, the kneading temperature [T(1)](°C) preferably satisfies the following formula (3):

$$Tm < T(1) < T_{60} + 5 \qquad (3)$$

As in melt, the kneading at a temperature lower than the melting point (Tm) of the resin is substantially impossible. When the kneading temperature is higher than the uppermost limit of the above formula (3), it is unfavorable since a measurable amount of the radical generator may decompose. In addition, since the decomposition speed of the radical generator is higher at a higher temperature, it is desirable that the kneading is at a temperature as low as possible for melt-blending not initiating radical reaction; and more preferred is the following relational formula (3)':

$$Tm < T(1) < T_{60} - 3 \qquad (3)'$$

One preferred embodiment of the method for producing the polyethylene resin (a) used in the invention may be a method including a step of melt-kneading a polyolefin resin and a radical generator at a temperature T(2) satisfying the above-mentioned relational formula (2) or (2)'; or as another preferred embodiment, employable is a method that comprises a first step of melt-kneading a polyolefin resin and a radical generator at a temperature T(1) satisfying the above-mentioned relational formula (3) or (3)' followed by a second step of melt-kneading the product in the first step, at a temperature T(2) satisfying the above-mentioned relational formula (2) or (2)'.

Regarding the melt flow rate (MFR) of the polyethylene resin (a) as radical-modified from a high-pressure radical polymerization process low-density polyethylene, preferably, the MFR(a) thereof is from 0.1 to 30 g/10 min, more preferably from 0.3 to 28, even more preferably from 0.5 to 25. When the MFR(a) is less than 0.1 g/10 min, then the high-speed workability in extrusion lamination may be poor. Those with more than 30 g/10 min are unfavorable as they may have poor working stability in extrusion lamination.

The density of the polyethylene resin composition (a) is preferably within a range of from 0.905 to 0.940 g/cm$^3$, more preferably from 0.907 to 0.937, even more preferably from 0.910 to 0.935. When the density is less than 0.905 g/cm$^3$, then it is unfavorable since the resin for lamination may be poor in the slidability and the handling thereof may be bad. Those with a density of more than 0.940 g/cm$^3$ will be difficult to produce industrially.

The memory effect of the polyethylene resin (b) is preferably at least 1.7, more preferably at least 1.8, even more preferably at least 1.9, still more preferably at least 2.0.

The high-pressure radical process low-density polyethylene resin (b), one of the polyethylene resin (b) to be mixed with the polyethylene resin (a) as radical-modified from a high-pressure radical polymerization process low-density polyethylene, differs from the starting material high-pressure radical process low-density polyethylene resin for the above component (a), and preferably satisfies the following: (b1) The melt flow rate (MFR(b)) as measured according to JIS K7210 (at 190°C and under a load of 21.18 N) is from 2 to 70 g/10 min, and (b2) the density as measured according to JIS K7112 at a test temperature of 23°C is from 0.905 to 0.940 g/cm$^3$. The production method for it is the same as that for the above-mentioned high-pressure radical process low-density polyethylene resin, and the resin is produced with suitably varying the polymerization condition so that its properties can satisfy the above.

The MFR(b) of the high-pressure radical process low-density polyethylene resin (b) is within a range of from 2 to 70 g/10 min, preferably from 3 to 65, more preferably from 4 to 60. The high-pressure radical process low-density polyethylene resin (b) can be said to be an ingredient for improving the MFR of the modified, high-pressure radical process low-density polyethylene resin (a); and when the MFR(b) is less than 2 g/10 min, it is unfavorable since the high-speed workability in extrusion lamination may be poor. On the other hand, those with MFR(b) of more than 70 g/10 min are unfavorable as they may have a risk of instability in extrusion lamination.

The density of the high-pressure radical process low-density polyethylene resin (b) is within a range of from 0.905 to 0.940 g/cm$^3$, preferably from 0.907 to 0.937, more preferably from 0.910 to 0.935. When the density is less than 0.905 g/cm$^3$, then it is unfavorable since the resin for lamination may be poor in the slidability and the handling thereof may be bad. Those with a density of more than 0.940 g/cm$^3$ will be difficult to produce industrially.

The ethylene/$\alpha$-olefin copolymer (b), another candidate of the polyethylene resin (b) to be mixed with the polyethylene resin (a) as radical-modified from a high-pressure radical polymerization process low-density polyethylene, is preferably a copolymer of ethylene and an $\alpha$-olefin having from 3 to 20 carbon atoms, which satisfies the following: (b1) the melt flow rate (MFR) is from 0.1 to 100 g/10 min, and (b2) the density is from 0.860 to 0.970 g/cm$^3$.

The ethylene/$\alpha$-olefin copolymer (b) is, in general, broadly divided into three: (i) an ethylene/$\alpha$-olefin copolymer having a density of from 0.860 to less than 0.910 g/cm$^3$ and an MFR of from 0.1 to 100 g/10 min (this may be referred to as an ultra-low-density polyethylene resin), (ii) an ethylene/$\alpha$-olefin copolymer having a density of from 0.910 to less than 0.940 g/cm$^3$ and an MFR of from 0.01 to 100 g/10 min (this may be referred to as a linear low-density polyethylene resin), (iii) an ethylene/$\alpha$-olefin copolymer having a density of from 0.940 to 0.970 g/cm$^3$ and an MFR of from 0.1 to 100 g/10 min (this may be referred to as a high-density polyethylene resin).

The melt flow rate (MFR) (b1) of the ethylene/$\alpha$-olefin copolymer (b) is preferably selected within a range of from 0.01 to 100, more preferably from 0.05 to 80, even more preferably from 0.1 to 70 g/10 min. When the MFR is less than 0.01 g/10 min, then it is unfavorable since the high-speed workability in extrusion lamination may be poor. On the other hand, those with MFR of more than 100 g/10 min are unfavorable as they may have a risk of instability in extrusion lamination.

The density (b2) of the ethylene/$\alpha$-olefin copolymer (b) is preferably within a range of from 0.860 to 0.970 g/cm$^3$, more preferably from 0.880 to 0.960, even more preferably from 0.890 to 0.950. When the density is less than 0.860 g/cm$^3$, then it is unfavorable since the resin for lamination may be poor in the slidability and the handling thereof may be bad. Those with a density of more than 0.970 g/cm$^3$ will be difficult to produce industrially.

The $\alpha$-olefin is preferably a linear or branched chain olefin having from 3 to 20 carbon atoms, including, for example, propylene, 1-butene, 1-pentene, 1-hexene, 4-methyl-1-pentene, 1-octene, 1-decene. Of those copolymers, preferred are an ethylene/1-butene copolymer, an ethylene/1-hexene copolymer, an ethylene/4-methyl-1-pentene copolymer, an ethylene/1-octene copolymer.

The ethylene/$\alpha$-olefin copolymer (b) is produced according to a slurry polymerization method, a solution polymerization method, a vapor-phase polymerization method or the like under low, middle or high pressure, using an ionic polymerization catalyst such as a Ziegler catalyst, a Phillips catalyst, a single-site catalyst, etc.; and it may be favorably produced by controlling the polymerization condition such as the polymerization temperature, the pressure, etc., and the catalyst promoter, etc.

Of the ethylene/α-olefin copolymer (b), preferred is a resin produced with a single-site catalyst, and more preferred is an ultra-low-density polyethylene resin having a density of from 0.860 to less than 0.910 g/cm³, or a linear low-density polyethylene resin having a density of from 0.910 to 0.940 g/cm³.

These ultra-low-density polyethylene resin and linear low-density polyethylene resin produced with a single-site catalyst contain a fewer amount of a low-molecular-weight component than those produced with an ordinary Ziegler catalyst or a Phillips catalyst, and have better transparency and blocking resistance; and in addition, they have a low melting point and have good high-speed sealability, and are therefore favorably used for extrusion lamination or sealant films, etc.

In the invention, also preferably used are a linear low-density polyethylene resin having long-chain branches, and an ultra-low-density polyethylene resin produced with a single-site catalyst that is being remarkably developed these days. Specific examples of these linear low-density polyethylene and ultra-low-density polyethylene produced with a single-site catalyst include Kamel and Hermorex (trade names - the same shall apply hereinunder - by Nippon Polyethylene), Evolue (by Mitsui Chemical), Exact (by Exxon Mobile), Affinity (by Dow Chemical), etc.

The above-mentioned ultra-low-density polyethylene resin, linear low-density polyethylene resin and high-density polyethylene resin produced with a single-site catalyst are generally obtained through copolymerization of ethylene and an α-olefin having from 3 to 20 carbon atoms in the presence of a catalyst containing a transition metal compound of Group IV of the Periodic Table having a cyclopentadienyl skeleton-having ligand and optionally a catalyst promoter, an organic aluminium compound and a carrier; and for example, they can be produced using a metallocene catalyst disclosed in Japanese Patent Publications S60-35006-A, S60-35007-A, S60-35008-A, H03-163088-A, S61-296008-A, etc.

[Blend ratio of resin (a) and resin (b)]

The blend ratio of the modified, high-pressure radical process low-density polyethylene resin (a) and the ethylene/α-olefin copolymer (b) is within a range of from 10 to 90% by weight of (a) to from 10 to 90% by weight of (b), preferably from 15 to 85% by weight of (a)/from 85 to 15% by weight of (b), more preferably from 20 to 80% by weight of (a)/from 80 to 20% by weight of (b).

When the resin (a) is less than 10% by weight and the resin (b) is more than 90% by weight, or when the resin (a) is more than 90% by weight and the resin (b) is less than 10% by weight, then it is unfavorable as bringing about some disadvantages that the properties of the polyethylene resin composition (c) could not be controlled, and consequently there occur other disadvantages that the neck-in in extrusion lamination may increase and the stability in working may worsen.

Preferably, the high-pressure radical process low-density polyethylene resin (a) and the ethylene/α-olefin copolymer (b) are so combined that the MFR(a) of the former and the MFR(b) of the latter satisfy the following relational formula (1), more preferably the formula (1-1), even more preferably the formula (1-2):

$$\mathrm{MFR(b)/MFR(a)} > 1 \qquad \text{Formula (1)}$$

$$\mathrm{MFR(b)/MFR(a)} > 2 \qquad \text{Formula (1-1)}$$

$$\mathrm{MFR(b)/MFR(a)} > 2.5 \qquad \text{Formula (1-2)}$$

In particular, preferably, the high-pressure radical process low-density polyethylene (a) has a lower MFR and a higher ME than the ethylene/α-olefin copolymer (b); and the ethylene/α-olefin copolymer (b) has a higher MFR than the high-pressure radical process low-density polyethylene resin (a). Satisfying the above relationship, the shaping operation in lamination may be smoother, and the loss owing to neck-in could be reduced significantly.

(A-5) Further, another preferred embodiment of the polyolefin resin (A) used in the invention is one prepared by adding a radical generator to a polyethylene resin composition (c) that comprises from 10 to 90% by weight of a high-pressure radical polymerization process low-density polyethylene resin (a) and from 10 to 90% by weight of an ethylene/α-olefin copolymer (b), and melt-kneading it at a radical reaction temperature shown by the following relational formula (formula 2):

$$T_{60} + 30 < T(2) < T_{60} + 120 \qquad \text{(formula 2)}$$

(wherein T(2) is a radical reaction temperature [°C], $T_{60}$ is a one-hour half-life temperature [°C] of the radical generator).

The high-pressure radical process low-density polyethylene resin (a) is preferably a high-pressure radical process low-density polyethylene resin satisfying the following: (a1) the MFR(a) is from 0.1 to 30 g/10 min, (a2) the density is from 0.905 to 0.940 g/cm$^3$, and (a3) the memory effect (ME) is at least 1.7.

The melt flow rate (MFR) of the high-pressure radical process low density polyethylene resin (a) is preferably from 0.1 to 30 g/10 min, more preferably from 0.3 to 28, even more preferably from 0.5 to 25. When the MFR(a) is less than 0.1 g/10 min, the high-speed workability in extrusion lamination may be poor. On the other hand, those with more than 30 g/10 min are unfavorable as they may worsen the working stability in extrusion lamination.

The density of the high-pressure radical process low-density polyethylene resin (a) is preferably within a range of from 0.905 to 0.940 g/cm$^3$, more preferably from 0.907 to 0.937, even more preferably from 0.910 to 0.935. When the density is less than 0.905 g/cm$^3$, then it is unfavorable since the resin for lamination may be poor in the slidability and the handling thereof may be bad. Those with a density of more than 0.940 g/cm$^3$ will be difficult to produce industrially.

The memory effect of the high-pressure radical process low-density polyethylene resin (a) is preferably at least 1.7, more preferably at least 1.8, even more preferably at least 1.9, still more preferably at least 2.0.

The high-pressure radical process low-density polyethylene resin (A) used in the invention may be produced according to the same method as above.

The ethylene/$\alpha$-olefin copolymer (b) is preferably a copolymer of ethylene and an $\alpha$-olefin having from 3 to 20 carbon atoms, which satisfies the following: (b 1) The melt flow rate (MFR) as measured according to JIS K7210 (at 190°C and under a load of 21.18 N) is from 0.1 to 100 g/10 min, and (b2) the density as measured according to JIS-K7112 at a test temperature of 23°C is from 0.860 to 0.970 g/cm$^3$.

The ethylene/$\alpha$-olefin copolymer (b) is, in general, broadly divided into three: (i) an ethylene/$\alpha$-olefin copolymer having a density of from 0.860 to less than 0.910 g/cm$^3$ and an MFR of from 0.1 to 100 g/10 min (this may be referred to as an ultra-low-density polyethylene resin), (ii) an ethylene/$\alpha$-olefin copolymer having a density of from 0.910 to less than 0.940 g/cm$^3$ and an MFR of from 0.01 to 100 g/10 min (this may be referred to as a linear low-density polyethylene resin), (iii) an ethylene/$\alpha$-olefin copolymer having a density of from 0.940 to 0.970 g/cm$^3$ and an MFR of from 0.1 to 100 g/10 min (this may be referred to as a high-density polyethylene resin).

The melt flow rate (MFR) (b1) of the ethylene/$\alpha$-olefin copolymer (b) is preferably selected within a range of from 0.01 to 100 g/10 min, more preferably from 0.05 to 80, even more preferably from 0.1 to 70.

When the MFR is less than 0.01 g/10 min, then it is unfavorable since the high-speed workability in extrusion lamination may be poor. On the other hand, those with MFR of more than 100 g/10 min are unfavorable as they may have a risk of instability in extrusion lamination.

The density (b2) of the ethylene/$\alpha$-olefin copolymer (b) is preferably within a range of from 0.860 to 0.970 g/cm$^3$, more preferably from 0.880 to 0.960, even more preferably from 0.890 to 0.950. When the density is less than 0.860 g/cm$^3$, then it is unfavorable since the resin for lamination may be poor in the slidability and the handling thereof may be bad. Those with a density of more than 0.970 g/cm$^3$ will be difficult to produce industrially.

The $\alpha$-olefin is preferably a linear or branched chain olefin having from 3 to 20 carbon atoms, including, for example, propylene, 1-butene, 1-pentene, 1-hexene, 4-methyl-1-pentene, 1-octene, 1-decene Of those copolymers, preferred are an ethylene/1-butene copolymer, an ethylene/1-hexene copolymer, an ethylene/4-methyl-1-pentene copolymer, an ethylene/1-octene copolymer.

The ethylene/$\alpha$-olefin copolymer (b) is produced according to a slurry polymerization method, a solution polymerization method, a vapor-phase polymerization method or the like under low, middle or high pressure, using an ionic polymerization catalyst such as a Ziegler catalyst, a Phillips catalyst, a single-site catalyst, etc.; and it may be favorably produced by controlling the polymerization condition such as the polymerization temperature, the pressure, etc., and the catalyst promoter, etc.

Of the ethylene/$\alpha$-olefin copolymer (b), preferred is a resin produced with a single-site catalyst, and more preferred is an ultra-low-density polyethylene resin having a density of from 0.860 to less than 0.910 g/cm$^3$, or a linear low-density polyethylene resin having a density of from 0.910 to 0.940 g/cm$^3$.

These ultra-low-density polyethylene resin and linear low-density polyethylene resin produced with a single-site catalyst are as described above.

(1-3) Polyethylene Resin Composition (c):

The blend ratio of the high-pressure radical process low-density polyethylene resin (a) and the ethylene/$\alpha$-olefin copolymer (b) is within a range of from 10 to 90% by weight of (a) to from 10 to 90% by weight of (b), preferably from 15 to 85% by weight of (a)/from 85 to 15% by weight of (b), more preferably from 20 to 80% by weight of (a)/from 80 to 20% by weight of (b).

When the resin (a) is less than 10% by weight and the resin (b) is more than 90% by weight, or when the resin (a) is more than 90% by weight and the resin (b) is less than 10% by weight, then it is unfavorable as bringing about some disadvantages that the properties of the polyethylene resin composition (c) could not be controlled, and consequently there occur other disadvantages that the neck-in in extrusion lamination may increase and the stability in working may worsen.

Preferably, the high-pressure radical process low-density polyethylene resin (a) and the ethylene/$\alpha$-olefin copolymer (b) are so combined that the MFR(a) of the former and the MFR(b) of the latter satisfy the following relational formula (1), more preferably the formula (1-1), even more preferably the formula (1-2):

$$MFR(b)/MFR(a) > 1 \qquad\qquad \text{Formula (1)}$$

$$MFR(b)/MFR(a) > 2 \qquad\qquad \text{Formula (1-1)}$$

$$MFR(b)/MFR(a) > 2.5 \qquad\qquad \text{Formula (1-2)}$$

In particular, preferably, the high-pressure radical process low-density polyethylene (a) has a lower MFR and a higher ME than the ethylene/$\alpha$-olefin copolymer (b); and the ethylene/$\alpha$-olefin copolymer (b) has a higher MFR than the high-pressure radical process low-density polyethylene resin (a).

Satisfying the above relationship, the shaping operation in lamination may be smoother, and the loss owing to neck-in could be reduced significantly.

The resin (A-5) for foamable laminates is produced by adding a radical generator to the above-mentioned polyethylene resin composition (c) and melt-kneading it at a radical reaction temperature shown by the above-mentioned relational formula (formula 2) mentioned below.

Preferably, the radical reaction temperature [T(2)](°C) satisfies the following relational formula (2), more preferably relational formula (2)':

Relational formula (2):

$$T_{60} + 30 < T(2) < T_{60} + 120$$

$$\text{Formula (2)}$$

Relational formula (2)':

$$T_{60} + 40 < T(2) < T_{60} + 110$$

$$\text{Formula (2)'}$$

(wherein $T_{60}$ is a one-hour half-life temperature [°C] of the radical generator).

The melt blending is for fully dispersing the radical generator in the resin at the controlled radical reaction temperature. For this, it is important to select the kneading temperature at which the radical reaction can be controlled. In the invention, the kneading temperature [T(1)](°C) preferably satisfies the following formula (3):

$$Tm < T(1) < T_{60} + 5 \qquad\qquad (3)$$

Since the decomposition speed of the radical generator is higher at a higher temperature, it is desirable that the kneading is at a temperature as low as possible for melt-blending not initiating radical reaction; and more preferred is the following relational formula (3)':

$$Tm < T(1) < T_{60} - 3 \qquad (3)'$$

(c1) MFR:

The MFR(c) of the resin (A-5) for foamable laminates is from 0.1 to 30 g/10 min, preferably from 0.3 to 28, more preferably from 0.5 to 25.

The density of the resin (A-5) for foamable laminates is from 0.905 to 0.940 g/cm$^3$, preferably from 0.907 to 0.937, more preferably from 0.910 to 0.935.

The memory effect (ME) of the resin (A-5) for foamable laminates is at least 1.5, preferably at least 1.6 more preferably at least 1.7.

The melting point of the resin (A-5) for foamable laminates of the invention is preferably selected within a range of from 80 to 120°C, more preferably from 90 to 110°C. When the melting point falls within the range, then the height of the foamed cells could be controlled suitably.

(A-6) A preferred embodiment of the polyolefin resin used in the invention to be mentioned finally here is a polyethylene resin composition (c) that comprises from 10 to 90% by weight of a high-pressure radical polymerization process low-density polyethylene (a) and from 10 to 90% by weight of a long-chain branch-having ethylene/α-olefin copolymer (b).

The high-pressure radical process low-density polyethylene resin (a) is preferably a high-pressure radical process low-density polyethylene resin that satisfies the following: (a1) the MFR(a) as measured according to JIS K7210 (at 190°C under a load of 21.18 N) is from 0.1 to 30 g/10 min, (a2) the density as measured according to JIS K7112 at a test temperature of 23°C is from 0.905 to 0.940 g/cm$^3$, and (a3) the memory effect (ME) as measured using a melt indexer used in JIS K7210 and under a test condition of a cylinder temperature of 240°C and a constant-rate throughput flow of 3 g/min, is at least 1.7. This is the same as that already mentioned in the above.

The long-chain branch-having ethylene/α-olefin copolymer (b) preferably satisfies the following: (b-1) The melt flow rate (MFR) as measured according to JIS K7210 (at 190°C and under a load of 21.18 N) is from 0.1 to 100 g/10 min, and (b-2) the density as measured according to JIS-K7112 at a test temperature of 23°C is from 0.860 to 0.970 g/cm$^3$. The long-chain branch-having ethylene/α-olefin copolymer (b) is produced through ionic polymerization as mentioned below, and includes an ethylene/α-olefin copolymer having a density of from 0.860 to less than 0.910 g/cm$^3$ and an MFR of from 0.1 to 100 g/10 min (this may be referred to as an ultra-low-density polyethylene resin), an ethylene/α-olefin copolymer having a density of from 0.910 to less than 0.940 g/cm$^3$ and an MFR of from 0.1 to 100 g/10 min (this may be referred to as a linear low-density polyethylene resin), and an ethylene (co)polymer having a density of from 0.940 to 0.970 g/cm$^3$ and an MFR of from 0.1 to 100 g/10 min (this may be referred to as a high-density polyethylene resin).

The melt flow rate (MFR) (b-1) of the long-chain branch-having ethylene/α-olefin copolymer (b) is selected within a range of from 0.1 to 100 g/10 min, preferably from 0.3 to 80, more preferably from 0.5 to 70. When the MFR is less than 0.1 g/10 min, then it is unfavorable since the high-speed workability in extrusion lamination may be poor. On the other hand, those with MFR of more than 100 g/10 min are unfavorable as they may have a risk of instability in extrusion lamination.

The density (b-2) of the long-chain branch-having ethylene/α-olefin copolymer (b) is within a range of from 0.860 to 0.970 g/cm$^3$, preferably from 0.880 to 0.940, more preferably from 0.890 to 0.935. When the density is less than 0.860 g/cm$^3$, then it is unfavorable since the resin for lamination may be poor in the slidability and the handling thereof may be bad. Those with a density of more than 0.970 g/cm$^3$ will be difficult to produce industrially.

The "long-chain branch"-having ethylene (co)polymer (ethylene/α-olefin copolymer used in the invention means to indicate an ethylene (co)polymer that shows rise of elongation viscosity, "strain hardening" in the time-elongation viscosity curve in elongation viscosity determination at a constant strain speed, and concretely, it is disclosed in Journal of Rheology, Vol. 42, No. 1, 1998, pp. 81-110, or JP 2000-212341-A, etc.

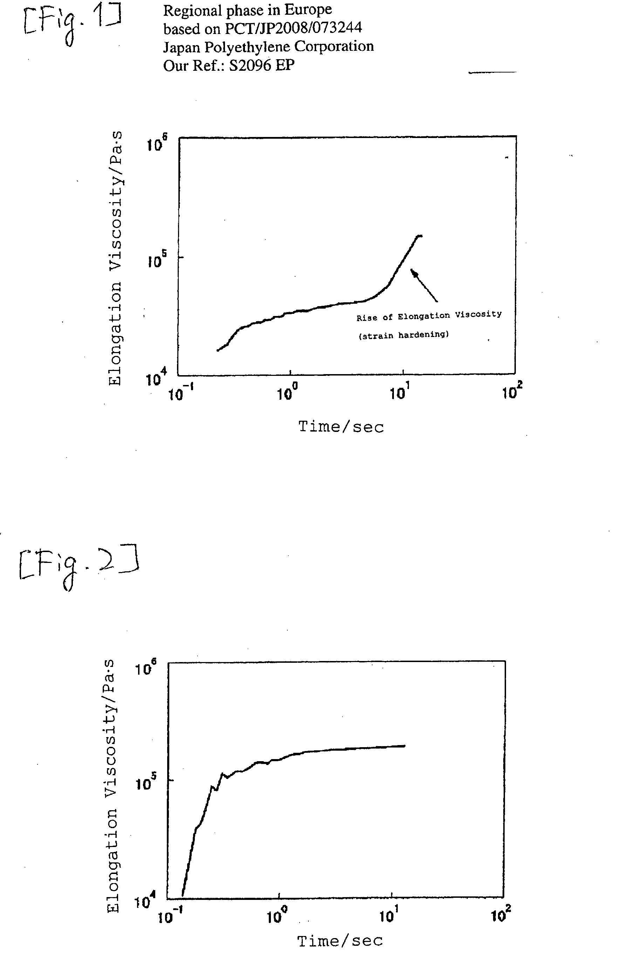

Specifically, the ethylene (co)polymer used in the invention shows rise of elongation viscosity (strain hardening) in the time-elongation viscosity curve in elongation viscosity determination at a constant strain speed. Rise of elongation viscosity (strain hardening) as referred to herein is a phenomenon that a gentle inclination in a time-elongation viscosity curve changes to a steep inclination at the time when the elongation strain has reached about 1 to 2, as shown in Fig. 1. The strain hardening is determined by the time-elongation viscosity curve in elongation viscosity measurement. A polyethylene resin with an ethylene (co)polymer of which the elongation viscosity has no rise (strain hardening), as in Fig. 2, is poor in shaping workability as its melt tension is low.

The rise of elongation viscosity (strain hardening) of ethylene (co)polymer is measured as follows.

(Measurement Method)

An ethylene (co)polymer is press-formed into a sheet having a width of from 5 to 10 mm, a length of from 55 to 70 mm and a thickness of from 1 to 3 mm, and the sheet, used as a test sample, is analyzed with an RME elongation viscometer by Rheometric Scientific to draw the time-elongation viscosity curve thereof.

The test temperature is a temperature (130°C) at which the sample melts, and the strain speed (sec$^{-1}$) is from 0.1 to 1, and the sample is elongated up to a strain 7. The time-elongation viscosity curve drawn in the test is checked for the presence or absence of rise of elongation viscosity (strain hardening) from the point at which the elongation strain has reached 1 to 2.

The $\alpha$-olefin is as mentioned above; and from the viewpoint of economic efficiency, preferred are an ethylene/1-butene copolymer, an ethylene/1-hexene copolymer, an ethylene/4-methyl-1-pentene copolymer, and an ethylene/1-octene copolymer.

As the long-chain branch-having ethylene/$\alpha$-olefin copolymer (b), preferred is a polyethylene resin produced with a single-site catalyst (including metallocene catalyst), and especially preferred are an ultra-low-density polyethylene resin and a linear low-density polyethylene resin having a viscosity of from 0.860 to 0.940 g/cm$^3$.

The long-chain branch-having linear low-density polyethylene and the ultra-low-density polyethylene produced with a single-site catalyst mentioned above are generally obtained through copolymerization of ethylene and an $\alpha$-olefin having from 3 to 20 carbon atoms and optionally a dienic monomer, in the presence of a catalyst containing a transition metal compound of Group IV of the Periodic Table having a cyclopentadienyl skeleton-having ligand and optionally a catalyst promoter, an organic aluminium compound and a carrier. A single-site ethylene/$\alpha$-olefin copolymer produced with a constrained geometry catalyst (CGCT) also has a high melt tension and has long-chain branches. As the polymer of the type, commercially available is Affinity TM, a trade name by Dow Chemical. Also commercially available is Sumitomo Chemical's GMH.

The blend ratio of the high-pressure radical process low-density polyethylene (a) and the ethylene/$\alpha$-olefin copolymer (b) is within a range of from 10 to 90% by weight of (A) to from 10 to 90% by weight of (B), preferably from 15 to 85% by weight of (A)/from 85 to 15% by weight of (B), more preferably from 20 to 80% by weight of (A)/from 80 to 20% by weight of (B).

2. Foamable Laminate:

The invention provides a foamable laminate comprising at least a paper-base substrate, a foamable resin layer (A) provided on one side of the substrate, and, as provided on the other side of the substrate, a thermoplastic resin layer (B) capable of retaining the vapor released from the substrate, wherein the foamable resin layer (A) is composed of the above-mentioned polyolefin resin (A) and the thermoplastic resin (B) is composed of a thermoplastic resin (B) having a specific melting point.

(1) Paper-base Substrate:

Not specifically defined, the paper-base substrate in the invention may be any one capable of foaming the polyolefin resin layer (A) provided on the surface thereof, by the vapor and the volatile matter released from the substrate.

For example, it includes high-quality paper, kraft paper, art paper, etc. The paper-base substrate may be coated with a substance capable of generating a volatile gas under heat, or a substance capable of generating a volatile gas under heat into the paper-base substrate. Of the paper-base substrate, paper such as pulp paper, synthetic paper or the like may be printed with ink to write figures, letters, patterns or the like thereon. The paper for the substrate preferably has a unit weight of from 100 to 400 g/m$^2$, more preferably from 150 to 350 g/m$^2$. The water content of the paper may be, for example, from 4 to 10%, preferably from 5 to 8% or so. The paper-base substrate may be printed.

(2) Foamable Resin Layer (A):

For the resin to constitute the foamable resin layer (A) in the foamable laminate of the invention, usable is the above-mentioned polyolefin resin (A). For forming uniform foamed cells at a high expansion ratio, the polyolefin resin is preferably so selected as to have a melting point falling within a range of from 80 to 120°C, more preferably within a range of from 90 to 110°C or so.

Not specifically defined, the thickness of the foamable resin layer (A) may be from 20 to 100 $\mu$m, preferably from 30 to 100 $\mu$m from the viewpoint of increasing the thickness of the foamed layer. When the thickness of the foamable resin layer (A) is less than 20 $\mu$m, then the layer may burst in foaming; but when more than 100 $\mu$m, then the foamed cells could not be sufficiently high.

If desired, the foamable resin layer (A) in the invention may be printed. The layer may be partially or entirely printed with a color ink. For the site to be printed, the size of the area to be printed, the printing method and the printing ink, conventional known techniques may be suitably selected and used.

(3) Thermoplastic Resin Layer (B):

The thermoplastic resin layer (B) in the foamable laminate of the invention plays a role of retaining the vapor or the like released from the substrate. "Retaining the vapor or the like released from the substrate" as referred to herein means that the layer barriers the vapor or the like released from the substrate so as to diffuse the vapor or the like to the side of the foamable resin layer (A) and to preferentially foam the foamable resin layer (A).

Not specifically defined, the thermoplastic resin (B) to constitute the thermoplastic resin layer (B) may be a resin having a higher melting point than that of the polyolefin resin (A) to form the foamable resin layer (A), or a non-melting resin; however, in order to preferentially foam the foamable resin layer (A) to readily form uniform and high foams, the melting point difference between the polyolefin resin (A) that is foamed by the vapor or the like released from the substrate under heat and the thermoplastic resin (B) that retains the vapor or the like released from the substrate preferably satisfies the following formula (4):

$$Tm(B) - Tm(A) \geq 10 \qquad (4)$$

(wherein $Tm(A)$ is the melting point (°C) of the polyolefin resin (A) of the layer (A); $Tm(B)$ is the melting point of the thermoplastic resin (B) of the layer (B)).

The thermoplastic resin (B) for use in the invention includes, for example, polyolefin resins, for example, $C_{2-10}$ α-olefin homopolymers such as high-density polyethylene, middle-density polyethylene, low-density polyethylene, linear low-density polyethylene, polypropylene resin, polybutene-1 resin, poly-4-methyl-pentene-1 resin, etc., and their mutual copolymers, etc.; polyamide resins, polyester resins, saponified derivatives of ethylene/vinyl acetate copolymers, vinyl chloride resins, vinylidene chloride resins, polystyrene resins, their mixtures, etc. Of those, preferred are polyolefin resins such as high-density polyethylene, middle-density polyethylene, linear low-density polyethylene, etc.

In case where a polyolefin resin is employed as the thermoplastic resin (B), preferred are those having an MFR of from 0.1 to 100, preferably from 0.3 to 80, more preferably from 0.5 to 60 g/10 min, and a density of from 0.920 to 0.970, preferably from 0.925 to 0.960, more preferably from 0.930 to 0.950 g/cm³ or so.

In consideration of the foamable resin layer (A), the melting point $Tm(B)$ is preferably selected within a range of not lower than 100°C, more preferably from 100 to 140°C, even more preferably from 110 to 140°C, still more preferably from 115 to 140°C. The melting point $Tm(B)$ is the melting point in second scanning in DSC, and is the melting point at the maximum peak height.

When the melting point is lower than 100°C, the heat resistance of the thermoplastic resin layer may be poor and the layer may foam; but when higher than 140°C, then the low-temperature heat-sealability of the layer may be poor.

In case where a resin poorly adhesive to the paper-base substrate, such as polyamide resin, polyester resin, saponified derivative of ethylene/vinyl copolymer, vinyl chloride resin, vinylidene chloride resin, polystyrene resin or the like is used, an ordinary adhesive resin or the like, such as an unsaturated carboxylic acid-modified polyolefin resin, an ethylene/unsaturated carboxylic acid copolymer of the like, may be provided between the substrate and the resin layer.

Not specifically defined, the thickness of the thermoplastic resin layer (B) may be selected generally within a range of from 10 to 100 μm, preferably within a range of from 20 to 100 μm, from the viewpoint of increasing the thickness of the foamed layer. When the thickness of the thermoplastic resin layer (B) is less than 10 μm, then the layer could not fully retain the vapor or the like released from the substrate and the thickness of the foamed layer could not be fully high. On the other hand, when more than 100 μm, any more effect could not be expected and economical disadvantage may increase.

Within a range not detracting from the advantage of the invention, any other layer may be provided between the constitutive layers, or as an additional inner layer and/or outer layer or the like, in the foamable laminate of the invention. For example, one or more film layers, decorative layers, reinforcing layers, adhesive layers, barrier layers or the like may be provided as additional inner layer and/or outer layer in the laminate of the substrate and the foamable resin layer (A) or further the thermoplastic resin layer (B), or between those layers, for example, like {polyethylene film layer/foamable resin layer (A)/substrate/thermoplastic resin layer (B)}, (polyethylene film layer/barrier layer/adhesive layer/foamable resin layer (A)/substrate/thermoplastic resin layer (B)), {foamable resin layer (A)/substrate/barrier layer/thermoplastic resin layer (B)}, {foamable resin layer (A)/substrate/thermoplastic resin layer (B)/barrier layer/thermoplastic resin layer (B)}, from the outside.

If desired, the laminate may be printed. It may be printed with a color ink, partly or entirely on the surface thereof. If desired, using a foamable ink, a foamable site may be provided partly or entirely on the surface. For the site to be printed, the size of the area to be printed, the printing method and the printing ink, conventional known techniques may be suitably selected and used.

The decorative layer includes printed paper, film, nonwoven fabric, woven fabric, etc.

The reinforcing layer is a polyethylene resin layer laminated as an outer layer on the polyolefin resin layer (A) laminated on the substrate, for the purpose of protecting the polyolefin layer (A) to be foamed under heat so that the foamed layer does not burst, and this act to prevent the layer from bursting owing to excessive foaming thereof and to uniformly correct the height of non-uniform foamed cells; or a film, a nonwoven fabric or the like may be laminated as the reinforcing layer to thereby enhance the mechanical strength of the foamed layer. Not specifically defined, the reinforcing resin may be a polyolefin resin such as polyethylene, polypropylene or the like, or a polyamide resin, a polyester resin, etc.

The resin to form the adhesive layer includes hot-melt or ordinary adhesives such as a copolymer of ethylene with an unsaturated carboxylic acid or its derivative, a modified polyolefin resin of a polyolefin resin grafted with an unsaturated carboxylic acid or the like, an ethylene/vinyl acetate copolymer, etc.

The resin to form the barrier layer includes polyamide resins, polyester resins, saponified derivatives of ethylene/vinyl acetate copolymer (EVOH), polyvinylidene chloride resins, polycarbonate resins, oriented polypropylene (OPP), oriented polyester (OPET), oriented polyamides; and the barrier layer also includes inorganic oxide-deposited films such as alumina-deposited film, silica-deposited film, etc., metal-deposited films such as aluminium-deposited film, etc., as well as metal foils, etc.

Not specifically defined, the production method for the foamable laminate of the invention may be any method capable of laminating the polyolefin resin layer (A) and the thermoplastic resin layer (B) on both surfaces of a paper-base substrate, for which, employable is extrusion lamination of directly laminating a molten resin, or sandwich lamination or dry lamination of laminating a previously-formed film, etc.

Extrusion lamination is a method of continuously applying a molten resin film as extruded out through a T-die, onto a substrate and pressing it, and this is a shaping method of attaining coating and adhesion at a time. Sandwich lamination is a method of casting a molten resin into a space between paper and a film to be laminated thereon, in which the molten resin acts as an adhesive for adhesion and lamination; and dry lamination is a method of removing the ambient moisture around the adhesive via which paper and a film to be laminated are stuck together and/or the adhesive coating roll, or heating the adhesive and/or the adhesive coating roll, or drying the surface of the film sheet to be stuck to paper.

In sandwich lamination and dry lamination, it is easy to laminate an aluminium foil, a polyester film, various barrier films or the like on the side of the paper-base substrate on which the thermoplastic resin layer (B) is formed in the invention, for the purpose of enhancing the barrier property of the laminate.

3. Foamed Paper:

The foamed paper of the invention is produced by heating the foamable laminate to foam the foamable resin layer (A). The height of the foamed cells of the foamed paper is preferably at least 370 $\mu$m, more preferably at least 400 $\mu$m. When the height of the foamed cells is less than 370 $\mu$m, then the paper could not have sufficient heat-insulating properties.

The heating method is not specifically defined, for which employable are hot air, microwaves, high frequency, IR rays, far-IR rays, etc. Not specifically defined, the heating temperature must be a temperature at which moisture could evaporated away from paper and the foamable resin could melt; and for example, the temperature may be from 100 to 200°C, preferably from 100 to 160°C, more preferably from 100 to 140°C. The heating time is preferably from 10 seconds to 5 minutes. When the heating temperature is lower than 100°C or when the heating time is shorter than 10 seconds, a sufficient foamed cell height could not be obtained. When too much heated at a heating temperature higher than 200°C or for a heating time longer than 5 minutes, the foamed cells might be deformed or might lose uniformity.

The foamed paper is used needless-to-say not only as heat-insulating/heat-retaining materials for heat-insulating containers such as cups and the like mentioned below, but also buffer materials, sound-insulating materials, formed papers, etc.; and is put to practical use as agricultural, industrial and household materials such as sleeve materials, paper dishes, trays, nonslip materials, packaging materials for fruits, foamed papers, etc.

4. Heat-Insulating Container:

The heat-insulating container of the invention is produced by shaping the above-mentioned foamable laminate into a container, then heating it and foaming the polyolefin resin layer (A).

Like in the above-mentioned foamed paper, the height of the foamed cells in the heat-insulating container is also preferably at least 370 $\mu$m, more preferably at least 400 $\mu$m. When the height of the foamed cells is less than 370 $\mu$m, the container could have sufficient heat-insulating properties.

Thus obtained, the heat-insulating container may be used as a tray, a cup, etc. Its applications include containers for hot drinks, containers for cup soup, containers for cup miso soup, containers for pot noodle, containers for natto, containers for box lunch, containers for coffee cup, microwave-safe containers, etc.

5. Production Method for Heat-Insulating Container:

The method for producing the above-mentioned heat-insulating containers, especially cups is characterized by forming a foamable laminate that comprises at least, as formed on one side of a paper-base substrate, a polyethylene resin layer (I) having a thickness of from 20 to 100 μm and capable of being foamed by the vapor or the like released from a substrate under heat, by the use of a polyethylene resin composition (C), and, on the other side of the substrate, a thermoplastic resin layer (II) having a thickness of from 10 to 100 μm and capable of retaining the vapor or the like released from the substrate, by the use of a thermoplastic resin (D), then shaping it into a container, heating it at a heating temperature of from 100 to 200°C, and foaming the polyethylene resin layer (I) by the vapor or the like released from the substrate.

The production method for the heat-insulating containers is basically the same as the above-mentioned production method for foamed paper. In laminating on the substrate, employable is any ordinary lamination method. In extrusion lamination, the resin temperature just below the die falls within a range of from 200 to 350°C, preferably from 260 to 350°C, more preferably from 270 to 350°C. The shaping speed may be from 10 to 400 m/min, preferably from 10 to 350 m/min or so; and if desired, the substrate may be processed for corona discharge treatment, ozone treatment, plasma treatment, flame treatment or the like for enhancing the adhesiveness between the substrate and the polyethylene resin. Also if desired, an anchor coating agent may be applied to the substrate.

The thus-produced foamable laminate is once wound up into a roll, or is continuously fed out; the foamable laminate is then blanked out to give a blank for body part and a blank for bottom part; using an ordinary cup-shaping machine, the body part and the bottom part are jointed into a cup; then the cup is, either batchwise or on a running conveyor, transferred into a heating furnace, an oven tunnel or the like equipped with a supplier of hot air, high frequency waves, IR rays, far-IR rays or the like, in which the cup is heated and foamed into a heat-insulating container.

Especially in continuous production, the melting point difference between the polyethylene resin composition (C) to be foamed by the vapor or the like released from the substrate under heat, and the thermoplastic resin (D) to retain the vapor or the like released from the substrate preferably satisfies the relation of the following formula (3):

$$Tm(D) - Tm(C) \geq 10 \quad\quad\quad\quad\quad\quad (3)$$

(wherein Tm(C) is the melting point Tm (°C) of the polyethylene resin composition (C) of the layer (I); Tm(D) is the melting point Tm (°C) of the thermoplastic resin (D) of the layer (II) to retain the vapor or the like from the substrate.)

Accordingly, the high-speed formability by extrusion lamination or the like is good, and a foamed layer having uniformly foamed cells can be continuously formed at a high expansion ratio; and the container may have a good appearance and good printability, and its producibility is high. The heating time is preferably from 10 seconds to 5 minutes. When the heating temperature is lower than 100°C or the heating time is shorter than 10 seconds, a sufficient foamed cell height could not be obtained. When the heating temperature is higher than 200°C and/or the heating time is longer than 5 minutes, the foamed cells would be heated too much and would be therefore deformed, thereby causing individual variations of products.

Accordingly in the production method of the invention, use of the composition comprising the low-MFR high-ME, high-pressure radical process low-density polyethylene (A) and the high-MFR, high-pressure radical process low-density polyethylene (B) gives a foamed layer of uniformly foamed cells, in which the formability in extrusion lamination is good, the loss is small and the expansion ratio is high; and a heat-insulating container can be obtained with ease, having good heat-insulating properties and good appearance.

EXAMPLES

The invention is described more concretely with reference to the following Examples; however, the invention is not limited to these Examples.

The polyolefin resins used in these Examples, their physical properties, and the obtained foamed laminated and others are tested according to the following test methods.

1. Test Methods:

(1) MFR:

This was measured according to JIS K7210 (at 190°C under a load of 21.18 N).

(2) Density:

Pellets were hot-pressed into a pressed sheet having a thickness of 2 mm, the sheet was put into a 1000-ml beaker filled with distilled water, and this was covered with a watch glass and heated with a mantle heater. After the distilled began to boil, this was boiled for 60 minutes, then the beaker was put on a wood rack and left cooled thereon. The operation was so controlled that the amount of the distilled water after boiled for 60 minutes could be 500 ml and the time to be taken until the beaker reached room temperature could not be shorter than 60 minutes. The test sheet was immersed nearly in the center part of water so as not to be in contact with the beaker and the water surface. The sheet was annealed under the condition of 23°C and a humidity of 50% for a period of from 16 hours to 24 hours, and then blanked to give a piece of 2 mm (length) × 2 mm (width). The test piece was tested at a test temperature of 23°C according to JIS-K7112.

(3) Memory Effect (ME):

This was measured using a semiautomatic ME meter by Misuzu Erie, a melt indexer used in JIS K7210, under a test condition of a cylinder temperature of 240°C and a constant-rate throughput flow of 3 g/min, in the manner mentioned below.

A 2.095 mmφ nozzle for MFR measurement is set in a device, and a resin is filled into a furnace. A piston is put on it, then this is kept for constant-rate extrusion at 0.09 g/min for 5 minutes, then kept for constant-rate extrusion at 3 g/min and degassed up to 6 minutes and 30 seconds. After 6 minutes and 30 seconds, the strand is cut while still kept at 3 g/min; and at the time when the strand length from the lower end of the orifice has reached 20 mm, the diameter of the strand is measured at the position of 15 mm from the lower end of the orifice, using KEYENCE's laser sizer (LS-3033). The measured diameter of the strand is represented by D, and the orifice diameter of the die is by Do (2.095 mm), and ME is computed according to the following formula:

$$ME = D/D_0$$

(4) Melting Point:

Pellets were hot-pressed into a sheet, and blanked with a punch to give a sample. This was analyzed under the condition mentioned below in a sequence of first heating and second heating, and the highest peak temperature in the second heating was taken as the melting point.

> Device: Seiko Instruments' DSC220
> Heating/Cooling Condition:

> First Heating: from 30°C to 200°C at 40°C/min
> Cooling: from 200°C to 20°C at 10°C/min
> Second Heating: from 20°C to 200°C at 10°C/min

> Soaking Time: 5 minutes after the first heating, and 5 minutes after the cooling.
> Sample Amount: 5 mg
> Reference: aluminium

(5) Workability:

In extrusion lamination of the polyolefin resin (A), it was visually checked as to whether or not the working operation could be stable.

> O: The melt film could be worked stably.

×: The melt film was unstable, and a sample having a uniform thickness could not be taken.

(6) Foamability:

The cross section of the foamed laminate was observed with a 50-power microscope, and the thickness of the foamed layer was measured to be the foamed cell height.

(7) Uniformity of Foamed Cells:

The surface of the foamed laminate was visually checked for the presence or absence of partial overfoaming and for the uniformity.

O: Good

Δ: Cell height was nonuniform.

×: Some cells broke.

2. Resin (MFR as g/10 min; density as g/cm$^3$; Tm (melting point Tm(a)):

(1) Polyolefin Resin (a):

a1 : high-pressure process low-density polyethylene with MFR 30, density 0.917, ME 1.6 and Tm 103°C.

a2: high-pressure process low-density polyethylene with MFR 50, density 0.916, ME 1.2 and Tm 102°C.

a3: high-pressure process low-density polyethylene with MFR 14, density 0.918, ME 1.9 and Tm 104°C.

a4: high-pressure process low-density polyethylene with MFR 9, density 0.921, ME 1.9 and Tm 108°C.

a5: high-pressure process low-density polyethylene with MFR 4, density 0.923, ME 2.0 and Tm 110°C.

a6: high-pressure process low-density polyethylene with MFR 8, density 0.919, ME 1.9 and Tm 105°C.

a7: high-pressure process low-density polyethylene with MFR 20, density 0.917, ME 1.7 and Tm 103°C.

a8: high-pressure process low-density polyethylene with MFR 76, density 0.915, ME 1.1 and Tm 101°C.

a9: high-pressure process low-density polyethylene with MFR 3, density 0.919, ME 2.4 and Tm 105°C.

a10: high-pressure process low-density polyethylene with MFR 8, density 0.918, ME 2.1 and Tm 104°C.

a11: high-pressure process low-density polyethylene with MFR 22, density 0.918, ME 1.3 and Tm 104°C.

a12: high-pressure process low-density polyethylene with MFR 4, density 0.929, ME 1.5 and Tm 104°C.

a13: high-pressure process low-density polyethylene with MFR 4, density 0.919, ME 2.3 and Tm 105°C.

a14: high-pressure process low-density polyethylene with MFR 17, density 0.917, ME 1.8 and Tm 103°C.
a1 to a14 are all high-pressure radical polymerization process low-density polyethylenes produced through polymerization in an autoclave reactor equipped, high-pressure process low-density polyethylene production apparatus.

a15: ethylene/α,-olefin copolymer with MFR 17, density 0.898, ME 1.1 and Tm 85°C.

a16: ethylene/α-olefin copolymer with MFR 8, density 0.902, ME 1.5 and Tm 97°C.

a17: high-pressure process low-density polyethylene with MFR 6, density 0.920, ME 1.4 and Tm 107°C.

a18: high-pressure process low-density polyethylene with MFR 45, density 0.915, ME 1.2 and Tm 101°C.

a17 and a18 are both high-pressure radical polymerization process low-density polyethylene produced through polymerization in a tubular reactor equipped, high-pressure process low-density polyethylene production apparatus.

(2) Thermoplastic Resin (b):

b1 : polyethylene resin (Nippon Polyethylene's trade name: HC170) with MFR 10, density 0.936 and Tm(b) 129°C.

(Example 1)

As the resin for the polyolefin resin layer (A), used was the polyolefin resin (a1). Kayaku Akzo's Trigonox 301 (having a purity of 41% and a one-hour half life temperature of 146°C) was so weighed that the radical generator, 3,6,9-triethyl-3,6,9-trimethyl-1,4,7-triperoxonan could be 0.01 parts by weight relative to 100 parts by weight of the polyolefin resin (a1), the two were mixed in a Henschel mixer for 2 minutes, and the mixture was radical-reacted in a 40-mm$\phi$ single-screw extruder under nitrogen seal and under the condition of a radial reaction temperature (T2) of 240°C and an extruder residence time of 90 seconds, thereby producing a polyethylene resin (with MFR 19 g/10 min, density 0.917 g/cm$^3$, ME 2.0, Tm 103°C) to constitute the polyolefin resin layer (A).

Subsequently, a paper substrate having a unit weight of 157 g/m$^2$ and a water content of 7% was corona-treated (30 W-min/m$^2$) on one side thereof Using an extrusion laminator with a 40$\phi$ extruder having a die effective width of 360 mm, the polyethylene resin (b1) having an MFR of 10 g/10 min, a density of 0.936 g/cm$^3$ and a melting point of 129°C, as the material to constitute the thermoplastic resin layer (B), was extrusion-laminated on the substrate at a resin temperature of 320°C and a machine speed of 20 m/min to form thereon a layer having a thickness of 20 $\mu$m, thereby producing a laminate of the thermoplastic resin layer (B) and the paper substrate.

Next, the paper substrate of the laminate was corona-treated (30 W·min/m$^2$) on the side thereof opposite to the side of the thermoplastic resin layer (B). Using an extrusion laminator with a 40$\phi$ extruder having a die effective width of 360 mm, the polyethylene resin obtained in the above, as the material to constitute the polyolefin resin layer (A), was extrusion-laminated on the substrate at a resin temperature of 320°C and a machine speed of 20 m/min to form thereon a layer having a thickness of 40 $\mu$m, thereby producing a foamable laminate composed of the polyolefin resin layer (A), the paper substrate and the thermoplastic resin layer (B).

The obtained foamable laminate was left in an oven at 130°C for 2 minutes, then taken out of the oven, and cooled at room temperature to give a foamed paper. The results are shown in Table 1. The foamed cell height of the foamed paper was 400 $\mu$m.

(Example 2)

A foamable laminate was produced in the same manner as in Example 1, for which, however, Trigonox 301 was added to the polyolefin resin (a1) in such a manner that the radical generator, 3,6,9-triethyl-3,6,9-trimethyl-1,4,7-triperoxonan could be 0.02 parts by weight. The properties of the polyethylene resin to constitute the polyolefin resin layer (A) were MFR of 13 g/10 min, density of 0.917 g/cm$^3$, ME of 2.3 and Tm of 103°C.

The obtained foamable laminate was left in an oven at 130°C for 2 minutes, then taken out of the oven, and cooled at room temperature to give a foamed paper. The results are shown in Table 1. The foamed cell height of the foamed paper was 430 $\mu$m.

(Example 3)

A foamable laminate was produced in the same manner as in Example 1, for which, however, Trigonox 301 was added to the polyolefin resin (a1) in such a manner that the radical generator, 3,6,9-triethyl-3,6,9-trimethyl-1,4,7-triperoxonan could be 0.04 parts by weight. The properties of the polyethylene resin to constitute the polyolefin resin layer (A) were MFR of 6 g/10 min, density of 0.917 g/cm$^3$, ME of 2.7 and Tm of 103°C.

The obtained foamable laminate was left in an oven at 130°C for 2 minutes, then taken out of the oven, and cooled at room temperature to give a foamed paper. The results are shown in Table 1. The foamed cell height of the foamed paper was 420 $\mu$m.

(Example 4)

A foamable laminate was produced in the same manner as in Example 1, for which, however, the polyolefin resin (a2) was used as the resin for the polyolefin resin layer (A). The properties of the polyethylene resin to constitute the polyolefin resin layer (A) were MFR of 34 g/10 min, density of 0.916 g/cm$^3$, ME of 1.6 and Tm of 102°C.
The obtained foamable laminate was left in an oven at 130°C for 2 minutes, then taken out of the oven, and cooled at room temperature to give a foamed paper. The results are shown in Table 1. The foamed cell height of the foamed paper was 380 μm.

(Example 5)

A foamable laminate was produced in the same manner as in Example 4, for which, however, Trigonox 301 was added to the polyolefin resin (a2) in such a manner that the radical generator, 3,6,9-triethyl-3,6,9-trimethyl-1,4,7-triperoxonan could be 0.02 parts by weight. The properties of the polyethylene resin to constitute the polyolefin resin layer (A) were MFR of 25 g/10 min, density of 0.916 g/cm$^3$, ME of 2.0 and Tm of 102°C.
The obtained foamable laminate was left in an oven at 130°C for 2 minutes, then taken out of the oven, and cooled at room temperature to give a foamed paper. The results are shown in Table 1. The foamed cell height of the foamed paper was 400 μm.

(Example 6)

A foamable laminate was produced in the same manner as in Example 5, for which, however, Trigonox 301 was added to the polyolefin resin (a2) in such a manner that the radical generator, 3,6,9-triethyl-3,6,9-trimethyl-1,4,7-triperoxonan could be 0.03 parts by weight. The properties of the polyethylene resin to constitute the polyolefin resin layer (A) were MFR of 19 g/10 min, density of 0.916 g/cm$^3$, ME of 2.3 and Tm of 102°C.
The obtained foamable laminate was left in an oven at 130°C for 2 minutes, then taken out of the oven, and cooled at room temperature to give a foamed paper. The results are shown in Table 1. The foamed cell height of the foamed paper was 410 μm.

(Example 7)

A foamable laminate was produced in the same manner as in Example 1, for which, however, Trigonox 301 was added to the polyolefin resin (a2) in such a manner that the radical generator, 3,6,9-triethyl-3,6,9-trimethyl-1,4,7-triperoxonan could be 0.04 parts by weight. The properties of the polyethylene resin to constitute the polyolefin resin layer (A) were MFR of 14 g/10 min, density of 0.916 g/cm$^3$, ME of 2.5 and Tm of 102°C.
The obtained foamable laminate was left in an oven at 130°C for 2 minutes, then taken out of the oven, and cooled at room temperature to give a foamed paper. The results are shown in Table 1. The foamed cell height of the foamed paper was 400 μm.

(Example 8)

A foamable laminate was produced in the same manner as in Example 1, for which, however, the polyolefin resin (a3) was used as the resin for the polyolefin resin layer (A). The properties of the polyethylene resin to constitute the polyolefin resin layer (A) were MFR of 10 g/10 min, density of 0.918 g/cm$^3$, ME of 2.2 and Tm of 104°C.
The obtained foamable laminate was left in an oven at 130°C for 2 minutes, then taken out of the oven, and cooled at room temperature to give a foamed paper. The results are shown in Table 1. The foamed cell height of the foamed paper was 400 μm.

(Example 9)

A foamable laminate was produced in the same manner as in Example 1, for which, however, the polyolefin resin (a4) was used as the resin for the polyolefin resin layer (A). The properties of the polyethylene resin to constitute the polyolefin resin layer (A) were MFR of 6 g/10 min, density of 0.921 g/cm$^3$, ME of 2.4 and Tm of 108°C.
The obtained foamable laminate was left in an oven at 130°C for 2 minutes, then taken out of the oven, and cooled at room temperature to give a foamed paper. The results are shown in Table 1. The foamed cell height of the foamed paper was 390 μm.

(Example 10)

A foamable laminate was produced in the same manner as in Example 1, for which, however, Kayaku Akzo's Kayahexa AD (having a purity of 90% or more and a one-time half-life temperature of 138°C) of 2,5-dimethyl-2,5-di(t-butylperoxy)hexane was used in place of the radical generator, 3,6,9-triethyl-3,6,9-trimethyl-1,4,7-triperoxonan. T2 was 240°C. The properties of the polyethylene resin to constitute the polyolefin resin layer (A) were MFR of 22 g/10 min, density of 0.916 g/cm$^3$, ME of 2.1 and Tm of 102°C.

The obtained foamable laminate was left in an oven at 130°C for 2 minutes, then taken out of the oven, and cooled at room temperature to give a foamed paper. The results are shown in Table 1. The foamed cell height of the foamed paper was 400 $\mu$m.

(Example 11)

A foamable laminate was produced in the same manner as in Example 1, for which, however, the polyolefin resin (a7) was used as the resin for the polyolefin resin layer (A). The properties of the polyethylene resin to constitute the polyolefin resin layer (A) were MFR of 17 g/10 min, density of 0.917 g/cm$^3$, ME of 1.8 and Tm of 103°C.

The obtained foamable laminate was left in an oven at 130°C for 2 minutes, then taken out of the oven, and cooled at room temperature to give a foamed paper. The results are shown in Table 1. The foamed cell height of the foamed paper was 390 $\mu$m.

(Examples 12 to 18)

A paper substrate having a unit weight of 157 g/m$^2$ and a water content of 7% was corona-treated (30 W·min/m$^2$) on one side thereof. Using an extrusion laminator with a 40$\phi$ extruder having a die effective width of 360 mm, a polyethylene resin (D1) having an MFR of 10 g/10 min, a density of 0.936 g/cm$^3$ and a melting point of 129°C, as the material to constitute the thermoplastic resin layer (II), was extrusion-laminated on the substrate at a resin temperature of 320°C and a machine speed of 20 m/min to form thereon a layer having a thickness of 20 $\mu$m, thereby producing a laminate of the thermoplastic resin layer (II) and the paper substrate.

Next, the paper substrate of the laminate was corona-treated (30 W·min/m$^2$) on the side thereof opposite to the side of the thermoplastic resin layer (II). Using an extrusion laminator with a 40$\phi$ extruder having a die effective width of 360 mm, a polyethylene resin composition (C) prepared by mixing high-pressure radical process polyethylene resins (A) and (B) in the blend ratio as in Table 2, as the material to constitute the polyethylene resin layer (I), was extrusion-laminated on the substrate at a resin temperature of 320°C and a machine speed of 20 m/min to form thereon a layer having a thickness of 40 $\mu$m, thereby producing a foamable laminate composed of the polyolefin resin layer (I), the paper substrate and the thermoplastic resin layer (II). In extrusion lamination of the polyethylene resin layer (I), the workability (melt film stability) as to whether or not the extrusion could be attained stably was visually evaluated.

The obtained foamable laminate was left in an oven at 120°C for 4 minutes, then taken out of the oven, and cooled at room temperature to give a foamed paper.

In all of Examples 12 to 18 satisfying the above-mentioned constituent features of the invention, the melt film had good working stability, and the foams were uniform, and the foamed cell height was more than 400 $\mu$m. The results are shown in Table 2.

(Example 19)

A foamable laminate was produced in the same manner as in Example 1, for which, however, the resin to constitute the polyolefin resin layer (A) was a polyethylene resin (with MFR 10 g/10 min, density 0.918 g/cm$^3$, ME 2.1 and Tm 105°C) prepared by mixing the polyolefin resins (a7) and (a9) in a ratio of 80/20, adding thereto Kayaku Akzo's Trigonox 301 (having a purity of 41% and a one-hour half-life temperature of 146°C), as so weighed that the radical generator, 3,6,9-triethyl-3,6,9-trimethyl-1,4,7-triperoxonan could be 0.01 parts by weight, and mixing them in a Henschel mixer for 2 minutes, and then radical-reacting the mixture in a 40-mm$\phi$ single-screw extruder under nitrogen seal and under the condition of a radial reaction temperature (T2) of 240°C and an extruder residence time of 90 seconds, thereby preparing the polyethylene resin to constitute the polyolefin resin layer (A).

The obtained foamable laminate was left in an oven at 130°C for 2 minutes, then taken out of the oven, and cooled at room temperature to give a foamed paper. The results are shown in Table 3. The foamed cell height of the foamed paper was 450 $\mu$m.

(Example 20)

A foamable laminate was produced in the same manner as in Example 1, for which, however, the resin to constitute the polyolefin resin layer (A) was a polyethylene resin (with MFR 10 g/10 min, density 0.906 g/cm³, ME 1.9 and Tm 100°C) prepared by mixing the polyolefin resin (a15), and the polyolefin resin (a13) (with MFR 4 g/10 min, density 0.919 g/cm³, ME 2.3 and Tm 105°C), as prepared by mixing the polyolefin resin (a9) and Kayaku Akzo's Trigonox 301 (having a purity of 41% and a one-hour half-life temperature of 146°C) that had been so weighed that the radical generator, 3,6,9-triethyl-3,6,9-trimethyl-1,4,7-triperoxonan could be 0.007 parts by weight, in a Henschel mixer for 2 minutes, and then radical-reacting the mixture in a 40-mmφ single-screw extruder under nitrogen seal and under the condition of a radial reaction temperature (T2) of 240°C and an extruder residence time of 90 seconds, in a ratio of 60/40 in a Henschel mixer for 2 minutes, and then melt-mixing the mixture in a 40-mmφ single-screw extruder under nitrogen seal at 160°C thereby preparing the polyethylene resin to constitute the polyolefin resin layer (A).
The obtained foamable laminate was left in an oven at 130°C for 2 minutes, then taken out of the oven, and cooled at room temperature to give a foamed paper. The results are shown in Table 3. The foamed cell height of the foamed paper was 410 μm.

(Example 21)

A foamable laminate was produced in the same manner as in Example 1, for which, however, the resin to constitute the polyolefin resin layer (A) was a polyethylene resin (with MFR 7 g/10 min, density 0.910 g/cm³, ME 2.1 and Tm 100°C) prepared by mixing the polyolefin resin (a15), and the polyolefin resin (a13) (with MFR 4 g/10 min, density 0.919 g/cm³, ME 2.3 and Tm 105°C), as prepared by mixing the polyolefin resin (a9) and Kayaku Akzo's Trigonox 301 (having a purity of 41% and a one-hour half-life temperature of 146°C) that had been so weighed that the radical generator, 3,6,9-triethyl-3,6,9-trimethyl-1,4,7-triperoxonan could be 0.007 parts by weight, in a Henschel mixer for 2 minutes, and then radical-reacting the mixture in a 40-mmφ single-screw extruder under nitrogen seal and under the condition of a radial reaction temperature (T2) of 240°C and an extruder residence time of 90 seconds, in a ratio of 40/60 in a Henschel mixer for 2 minutes, and then melt-mixing the mixture in a 40-mmφ single-screw extruder under nitrogen seal at 160°C thereby preparing the polyethylene resin to constitute the polyolefin resin layer (A).
The obtained foamable laminate was left in an oven at 130°C for 2 minutes, then taken out of the oven, and cooled at room temperature to give a foamed paper. The results are shown in Table 3. The foamed cell height of the foamed paper was 400 μm.

(Example 22)

A foamable laminate was produced in the same manner as in Example 1, for which, however, the resin to constitute the polyolefin resin layer (A) was a polyethylene resin (with MFR 12 g/10 min, density 0.918 g/cm³, ME 2.0 and Tm 105°C) prepared by mixing the polyolefin resin (a7), and the polyolefin resin (a13) (with MFR 4 g/10 min, density 0.919 g/cm³, ME 2.3 and Tm 105°C), as prepared by mixing the polyolefin resin (a9) and Kayaku Akzo's Trigonox 301 (having a purity of 41% and a one-hour half-life temperature of 146°C) that had been so weighed that the radical generator, 3,6,9-triethyl-3,6,9-trimethyl-1,4,7-triperoxonan could be 0.007 parts by weight, in a Henschel mixer for 2 minutes, and then radical-reacting the mixture in a 40-mmφ single-screw extruder under nitrogen seal and under the condition of a radial reaction temperature (T2) of 240°C and an extruder residence time of 90 seconds, in a ratio of 70/30 in a Henschel mixer for 2 minutes, and then melt-mixing the mixture in a 40-mmφ single-screw extruder under nitrogen seal at 160°C thereby preparing the polyethylene resin to constitute the polyolefin resin layer (A).
The obtained foamable laminate was left in an oven at 130°C for 2 minutes, then taken out of the oven, and cooled at room temperature to give a foamed paper. The results are shown in Table 3. The foamed cell height of the foamed paper was 410 μm.

(Example 23)

A foamable laminate was produced in the same manner as in Example 1, for which, however, the resin to constitute the polyolefin resin layer (A) was a polyethylene resin (with MFR 8 g/10 min, density 0.918 g/cm³, ME 2.2 and Tm 105°C) prepared by mixing the polyolefin resin (a7), and the polyolefin resin (a13) (with MFR 4 g/10 min, density 0.919 g/cm³, ME 2.3 and Tm 105°C), as prepared by mixing the polyolefin resin (a9) and Kayaku Akzo's Trigonox 301 (having a purity of 41% and a one-hour half-life temperature of 146°C) that had been so weighed that the radical generator, 3,6,9-triethyl-3,6,9-trimethyl-1,4,7-triperoxonan could be 0.007 parts by weight, in a Henschel mixer for 2 minutes, and then radical-reacting the mixture in a 40-mmφ single-screw extruder under nitrogen seal and under the condition of a radial reaction temperature (T2) of 240°C and an extruder residence time of 90 seconds, in a ratio of 40/60 in a Henschel mixer for 2 minutes, and then melt-mixing the mixture in a 40-mmφ single-screw extruder under nitrogen seal at 160°C thereby preparing the polyethylene resin to constitute the polyolefin resin layer (A).

The obtained foamable laminate was left in an oven at 130°C for 2 minutes, then taken out of the oven, and cooled at room temperature to give a foamed paper. The results are shown in Table 3. The foamed cell height of the foamed paper was 410 μm.

(Example 24)

A foamable laminate was produced in the same manner as in Example 1, for which, however, the resin to constitute the polyolefin resin layer (A) was a polyethylene resin (with MFR 9 g/10 min, density 0.904 g/cm$^3$, ME 2.0 and Tm 100°C) prepared by mixing the polyolefin resins (a15) and (a9) in a ratio of 70/30, adding thereto Kayaku Akzo's Trigonox 301 (having a purity of 41% and a one-hour half-life temperature of 146°C), as so weighed that the radical generator, 3,6,9-triethyl-3,6,9-trimethyl-1,4,7-triperoxonan could be 0.01 parts by weight, and mixing them in a Henschel mixer for 2 minutes, and then radical-reacting the mixture in a 40-mmφ single-screw extruder under nitrogen seal and under the condition of a radial reaction temperature (T2) of 240°C and an extruder residence time of 90 seconds, thereby preparing the polyethylene resin to constitute the polyolefin resin layer (A).

The obtained foamable laminate was left in an oven at 130°C for 2 minutes, then taken out of the oven, and cooled at room temperature to give a foamed paper. The results are shown in Table 3. The foamed cell height of the foamed paper was 450μ m.

(Example 25)

A foamable laminate was produced in the same manner as in Example 1, for which, however, the resin to constitute the polyolefin resin layer (A) was a polyethylene resin (with MFR 13 g/10 min, density 0.911 g/cm$^3$, ME 1.7 and Tm 101°C) prepared by mixing the polyolefin resin (a16), and the polyolefin resin (a14) (with MFR 17 g/10 min, density 0.917 g/cm$^3$ and ME 1.8), as prepared by mixing the polyolefin resin (a7) and Kayaku Akzo's Trigonox 301 (having a purity of 41% and a one-hour half-life temperature of 146°C) that had been so weighed that the radical generator, 3,6,9-triethyl-3,6,9-trimethyl-1,4,7-triperoxonan could be 0.007 parts by weight, in a Henschel mixer for 2 minutes, and then radical-reacting the mixture in a 40-mmφ single-screw extruder under nitrogen seal and under the condition of a radial reaction temperature (T2) of 240°C and an extruder residence time of 90 seconds, in a ratio of 40/60 in a Henschel mixer for 2 minutes, and then melt-mixing the mixture in a 40-mmφ single-screw extruder under nitrogen seal at 160°C thereby preparing the polyethylene resin to constitute the polyolefin resin layer (A).

The obtained foamable laminate was left in an oven at 130°C for 2 minutes, then taken out of the oven, and cooled at room temperature to give a foamed paper. The results are shown in Table 3. The foamed cell height of the foamed paper was 420 μm.

(Comparative Example 1)

A foamable laminate was produced in the same manner as in Example 1, for which, however, the polyolefin resin (a5) was used directly as it was for the resin for the polyolefin resin layer (A) but the radical generator was not added thereto.

The obtained foamable laminate was left in an oven at 130°C for 2 minutes, then taken out of the oven, and cooled at room temperature to give a foamed paper. The results are shown in Table 1. The foamed cell height of the foamed paper was 300 μm.

(Comparative Example 2)

A foamable laminate was produced in the same manner as in Example 1, for which, however, the polyolefin resin (a6) was used directly as it was for the resin for the polyolefin resin layer (A) but the radical generator was not added thereto.

The obtained foamable laminate was left in an oven at 130°C for 2 minutes, then taken out of the oven, and cooled at room temperature to give a foamed paper. The results are shown in Table 1. The foamed cell height of the foamed paper was 320 μm.

(Comparative Example 3)

Producing a foamable laminate was tried in the same manner as in Example 1. In this, the polyolefin resin (a2) was used directly as it was for the resin for the polyolefin resin layer (A), but the radical generator was not added thereto. However, the melt film from the T-die was unstable, and a uniform foamable laminate could not be obtained.

(Comparative Example 4)

Producing a foamable laminate was tried in the same manner as in Example 1. In this, the polyolefin resin (a8) was used directly as it was for the resin for the polyolefin resin layer (A), but the radical generator was not added thereto. However, the melt film from the T-die was unstable, and a uniform foamable laminate could not be obtained.

As is obvious from Table 1, it is known that the foamable laminates of Examples all had good workability and had excellent foamability, and in these, the foamed cell height was large, and excellent foamed papers were obtained. As opposed to these, it is known that Comparative Examples 1 and 2 were poor in the foamability and the famed cell height was small, and Comparative Examples 3 and 4 were insufficient in workability, and these were all impracticable as foamed paper.

(Comparative Example 5)

Producing a foamable laminate was tried in the same manner as in Example 12, for which, however, the high-pressure radical process low-density polyethylene resin (B1) was used alone as the resin to constitute the polyethylene resin layer (I). In lamination, the melt film was unstable and the workability thereof was bad, and a foamable laminate could not be obtained. The results are shown in Table 2.

(Comparative Example 6)

As the material to constitute the polyethylene resin layer (I), a polyethylene resin composition (C) prepared by mixing 30% by weight of the high-pressure radical process polyethylene resin (B4) and 70% by weight of the high-pressure radical process polyethylene resin (B1) was used, and this was extrusion-laminated in the same manner as in Example 12. However, its workability was poor, and a foamable laminate could not be produced. The results are shown in Table 2.

(Comparative Example 7)

As the material to constitute the polyethylene resin layer (I), a polyethylene resin composition (C) prepared by mixing 30% by weight of the high-pressure radical process polyethylene resin (A3) and 70% by weight of the high-pressure radical process polyethylene resin (B1) was used, and this was extrusion-laminated in the same manner as in Example 12. However, its workability was poor, and a foamable laminate could not be produced. The results are shown in Table 2.

(Comparative Example 8)

Producing a foamable laminate was tried in the same manner as in Example 1, using the high-pressure radical process low-density polyethylene resin (a17) alone as the resin to constitute the polyethylene resin layer (I). The melt film in lamination was unstable and the workability was poor, and a foamable laminate could not be produced.

(Comparative Example 9)

Producing a foamable laminate was tried in the same manner as in Example 1, using the high-pressure radical process low-density polyethylene resin (a18) alone as the resin to constitute the polyethylene resin layer (I). The melt film in lamination was unstable and the workability was poor, and a foamable laminate could not be produced.

(Example 26)

The foamable laminate comprising the polyethylene resin layer (I), the paper substrate and the thermoplastic resin layer (II) produced in Example 12 was blanked to give a body part blank and a bottom part blank capable of having a height of 90 mm and an inner diameter of 70 mm, and the body part blank and the bottom part blank were bonded to give a cup-like container. This was left in an oven at 120°C for 4 minutes, then taken out of the oven and cooled at room temperature to give a foamed cup-like container. The body part of the container was cut out, and checked for the foamability of the polyethylene resin layer (I) in the same manner as in Example 12. The foamed cells were uniform and had a height of 450 $\mu$m, and in this case of forming the cup container, the foaming condition was good.

[Table 1]

| | Polyolefin Resin Layer (A) | | | | | | | workability |
|---|---|---|---|---|---|---|---|---|
| | resin | MFR g/10 min | density g/cm³ | ME — | computed value of the left-hand value of formula 1 | Satisfaction of Formula 1 | Tm(a) °C | |
| Example 1 | a1 | 19 | 0.917 | 2.0 | 1.6 | ○ | 103 | ○ |
| Example 2 | a1 | 13 | 0.917 | 2.3 | 1.7 | ○ | 103 | ○ |
| Example 3 | a1 | 6 | 0.917 | 2.7 | 2.1 | ○ | 103 | ○ |
| Example 4 | a2 | 34 | 0.916 | 1.6 | 1.3 | ○ | 102 | ○ |
| Example 5 | a2 | 25 | 0.916 | 2.0 | 1.4 | ○ | 102 | ○ |
| Example 6 | a2 | 19 | 0.916 | 2.3 | 1.6 | ○ | 102 | ○ |
| Example 7 | a2 | 14 | 0.916 | 2.5 | 1.7 | ○ | 102 | ○ |
| Example 8 | a3 | 10 | 0.918 | 2.2 | 1.9 | ○ | 104 | ○ |
| Example 9 | a4 | 6 | 0.921 | 2.4 | 2.1 | ○ | 108 | ○ |
| Example 10 | a1 | 22 | 0.916 | 2.1 | 1.5 | ○ | 102 | ○ |
| Example 11 | a7 | 17 | 0.917 | 1.8 | 1.6 | ○ | 103 | ○ |
| Comparative Example 1 | a5 | 4 | 0.923 | 2.0 | 2.3 | × | 110 | ○ |
| Comparative Example 2 | a6 | 8 | 0.919 | 1.9 | 2.0 | × | 105 | ○ |
| Comparative Example 3 | a2 | 50 | 0.916 | 1.2 | 1.1 | ○ | 102 | × |
| Comparative Example 4 | a8 | 76 | 0.915 | 1.1 | 0.9 | ○ | 101 | × |

*Formula 1: $-0.467 \times Ln(MFR) + 2.93 \leq ME$)

*Formula 2: $(T_{60} + 30 < T(2) < T_{60} + 120)$

*Formula 3: $(Tm(B) - Tm(A) \geq 10)$

[Table 1] (Continued)

| | Polyolefin Resin Layer (B) | | Satisfac-tion of Formula 2 | Satisfact-ion of Formula 3 | Foamed Cell Height in Foamed Laminate μm |
|---|---|---|---|---|---|
| | resin | Tm(b) °C | | | |
| Example 1 | b1 | 129 | O | O | 400 |
| Example 2 | b1 | 129 | O | O | 430 |
| Example 3 | b1 | 129 | O | O | 420 |
| Example 4 | b1 | 129 | O | O | 380 |
| Example 5 | b1 | 129 | O | O | 400 |
| Example 6 | b1 | 129 | O | O | 410 |
| Example 7 | b1 | 129 | O | O | 400 |
| Example 8 | b1 | 129 | O | O | 400 |
| Example 9 | b1 | 129 | O | O | 390 |
| Example 10 | b1 | 129 | O | O | 400 |
| Example 11 | b1 | 129 | O | O | 390 |
| Comparative Example 1 | b1 | 129 | − | O | 300 |
| Comparative Example 2 | b1 | 129 | − | O | 320 |
| Comparative Example 3 | b1 | 129 | − | O | immeasurable |
| Comparative Example 4 | b1 | 129 | − | O | immeasurable |

*Formula 1: $-0.467 \times \mathrm{Ln(MFR)} + 2.93 \leq \mathrm{ME}$

*Formula 2: $T_{60} + 30 < T(2) < T_{60} + 120$

*Formula 3: $\mathrm{Tm(B)} - \mathrm{Tm(A)} \geq 10$

[Table 2]

| Example | Polyethylene Resin Layer (I) | | | | | | | | | | |
|---|---|---|---|---|---|---|---|---|---|---|---|
| | Resin A | | | | Resin B | | | | MFR Ratio of Resin B to Resin A | Blend Ratio of Resin B and Resin A | |
| | resin | MFR(a) | density | ME | resin | MFR(b) | density | ME | formula (2) | resin A | resin B |
| | | g/10 min | g/cm$^3$ | – | | g/10 min | g/cm$^3$ | | – | wt.% | wt.% |
| Example 12 | a9 | 3 | 0.919 | 2.4 | a11 | 22 | 0.918 | 1.3 | 7.3 | 40 | 60 |
| Example 13 | a9 | 3 | 0.919 | 2.4 | a11 | 22 | 0.918 | 1.3 | 7.3 | 25 | 75 |
| Example 14 | a10 | 8 | 0.918 | 2.1 | a11 | 22 | 0.918 | 1.3 | 2.8 | 70 | 30 |
| Example 15 | a9 | 3 | 0.919 | 2.4 | a2 | 50 | 0.916 | 1.2 | 16.7 | 40 | 60 |
| Example 16 | a9 | 3 | 0.919 | 2.4 | a2 | 50 | 0.916 | 1.2 | 16.7 | 70 | 30 |
| Example 17 | a10 | 8 | 0.918 | 2.1 | a2 | 50 | 0.916 | 1.2 | 6.3 | 90 | 10 |
| Example 18 | a9 | 3 | 0.919 | 2.4 | a2 | 50 | 0.916 | 1.2 | 16.7 | 80 | 20 |
| Comparative Example 5 | – | – | – | – | a11 | 22 | 0.918 | 1.3 | – | 0 | 100 |
| Comparative Example 6 | a12 | 4 | 0.929 | 1.5 | a11 | 22 | 0.918 | 1.3 | 5.5 | 30 | 70 |
| Comparative Example 7 | a7 | 20 | 0.917 | 1.7 | a11 | 22 | 0.918 | 1.3 | 1.1 | 30 | 70 |

*Formula 1: $-0.467 \times \text{Ln(MFR)} + 2.93 \leq \text{ME}$

*Formula 2: $T_{60} + 30 < T(2) < T_{60} + 120$

*Formula 3: $\text{Tm(B)} - \text{Tm(A)} \geq 10$

[Table 2] (Continued)

| Example | Polyethylene Resin Layer (I) | | | | | | | Thermoplastic Resin (II) | Satisfac-tion of Formula (3) | Foamable Laminate | |
|---|---|---|---|---|---|---|---|---|---|---|---|
| | Physical Properties of Mixture | | | | | | Stability of Melt Film | | | Foamed Cells | |
| | MFR(c) | density | ME | formula (1) | Satisfac-tion of Formula (1) | melting point | (workability) | melting point | | height | uniformity |
| | g/10 min | g/cm$^3$ | – | | | °C | | °C | | μm | – |
| Example 12 | 11 | 0.918 | 1.9 | 1.8 | O | 106 | O | 129 | O | 460 | O |
| Example 13 | 13 | 0.918 | 1.7 | 1.6 | O | 106 | O | 129 | O | 430 | O |
| Example 14 | 10 | 0.918 | 1.9 | 1.9 | O | 106 | O | 129 | O | 410 | O |
| Example 15 | 18 | 0.917 | 2.0 | 1.6 | O | 105 | O | 129 | O | 530 | O |
| Example 16 | 8 | 0.918 | 2.3 | 2.0 | O | 106 | O | 129 | O | 530 | O |
| Example 17 | 10 | 0.918 | 2.1 | 1.9 | O | 106 | O | 129 | O | 470 | O |
| Example 18 | 5 | 0.918 | 2.3 | 2.2 | O | 106 | O | 129 | O | 500 | O |
| Comparative Example 5 | 22 | 0.918 | 1.3 | 1.5 | x | 106 | x | 129 | O | immeasurable | – |
| Comparative Example 6 | 13 | 0.921 | 1.4 | 1.7 | x | 106 | x | 129 | O | immeasurable | – |
| Comparative Example 7 | 21 | 0.918 | 1.4 | 1.5 | x | 106 | x | 129 | O | immeasurable | – |

*Formula 1: $-0.467 \times Ln(MFR) + 2.93 \leq ME$

*Formula 2: $T_{60} + 30 < T(2) < T_{60} + 120$

*Formula 3: $Tm(B) - Tm(A) \geq 10$

[Table 3]

| Example | Polyethylene Resin Layer (I) | | | | | | | | | | |
|---|---|---|---|---|---|---|---|---|---|---|---|
| | Resin A | | | | Resin B | | | | MFR Ratio of Resin B to Resin A | Blend Ratio of Resin B and Resin A | |
| | resin | MFR(a) | density | ME | resin | MFR(b) | density | ME | formula (2) | component B | component A |
| | | g/10 min | g/cm$^3$ | – | | g/10 min | g/cm$^3$ | | – | wt.% | wt.% |
| Example 19 | a7 | 20 | 0.917 | 1.7 | a9 | 7 | 0.919 | 2.0 | 2.9 | 80 | 20 |
| Example 20 | a15 | 17 | 0.898 | 1.1 | a13 | 4 | 0.919 | 2.3 | 4.3 | 60 | 40 |
| Example 21 | a15 | 17 | 0.898 | 1.1 | a13 | 4 | 0.919 | 2.3 | 4.3 | 40 | 60 |
| Example 22 | a7 | 20 | 0.917 | 1.7 | a13 | 4 | 0.919 | 2.3 | 5.0 | 70 | 30 |
| Example 23 | a7 | 20 | 0.917 | 1.7 | a13 | 4 | 0.919 | 2.3 | 5.0 | 40 | 60 |
| Example 24 | a15 | 17 | 0.898 | 1.1 | a9 | 7 | 0.919 | 2.0 | 2.4 | 70 | 30 |
| Example 25 | a16 | 8 | 0.902 | 1.5 | a14 | 17 | 0.917 | 1.8 | | 40 | 60 |
| Comparative Example 8 | | | | | a17 | 6 | 0.920 | 1.4 | | 0 | 100 |
| Comparative Example 9 | | | | | a18 | 45 | 0.915 | 1.2 | | 0 | 100 |

*Formula 1: $-0.467 \times \mathrm{Ln(MFR)} + 2.93 \leq ME$

*Formula 2: $T_{60} + 30 < T(2) < T_{60} + 120$

*Formula 3: $\mathrm{Tm(B)} - \mathrm{Tm(A)} \geq 10$

EP 2 223 802 B1

EP 2 223 802 B1

[Table 3] (Continued)

| Example | Polyethylene Resin Layer (I) | | | | | | Thermoplastic Resin (II) | Satisfaction of Formula (3) | Foamable Laminate | |
|---|---|---|---|---|---|---|---|---|---|---|
| | Physical Properties of Mixture | | | | | Stability of Melt Film | | | Foamed Cells | |
| | MFR(c) | density | ME | formula (1) | melting point | (workability) | melting point | | height | uniformity |
| | g/10 min | g/cm³ | – | | °C | | °C | | μm | – |
| Example 19 | 10 | 0.918 | 2.1 | 1.9 | 105 | O | 129 | O | 450 | O |
| Example 20 | 10 | 0.906 | 1.9 | 1.9 | 100 | O | 129 | O | 410 | O |
| Example 21 | 7 | 0.910 | 2.1 | 2.0 | 100 | O | 129 | O | 400 | O |
| Example 22 | 12 | 0.918 | 2.0 | 1.8 | 105 | O | 129 | O | 410 | O |
| Example 23 | 8 | 0.918 | 2.2 | 2.0 | 105 | O | 129 | O | 410 | O |
| Example 24 | 9 | 0.904 | 2.0 | 1.9 | 100 | O | 129 | O | 450 | O |
| Example 25 | 13 | 0.911 | 1.7 | 1.7 | 101 | O | 129 | O | 420 | O |
| Comparative Example 8 | 6 | 0.920 | 1.4 | 2.1 | 106 | x | 129 | O | immeasurable | – |
| Comparative Example 9 | 45 | 0.915 | 1.2 | 1.2 | 106 | x | 129 | O | immeasurable | – |

*Formula 1: $-0.467 \times \mathrm{Ln(MFR)} + 2.93 \leq \mathrm{ME}$

*Formula 2: $\mathrm{T}_{60} + 30 < \mathrm{T(2)} < \mathrm{T}_{60} + 120$

*Formula 3: $\mathrm{Tm(B)} - \mathrm{Tm(A)} \geq 10$

While the invention has been described in detail and with reference to specific embodiments thereof, it will be apparent to one skilled in the art that various changes and modifications can be made therein without departing from the scope thereof.

This application is based on a Japanese patent application (Application No. 2007-327803) filed December 19, 2007 and a Japanese patent application (Application No. 2008-233694) filed September 11, 2008.

INDUSTRIAL APPLICABILITY

The resin used for forming a foamable laminate of the invention has good workability in extrusion lamination and can reduce the loss in working. The invention can provide a foamable laminate having a foamable layer that has a high expansion ratio and can form uniform foamed cells, with good producibility.

According to the invention, the foamable laminate comprises, provided on one side of a paper-base substrate, a foamable resin layer (A) comprising a specific polyolefin resin (A) and, provided on the other side of the substrate, a thermoplastic resin layer (B) capable of retaining the vapor released from the substrate. The foamable laminate is excellent in foamability, and by heating the foamable resin layer (A), a foamed paper and a heat-insulating container having a good appearance of the foamed layer therein can be produced with ease.

**Claims**

1. Use of a resin for forming a foamable resin layer (A) to be provided on at least one side of a paper-base substrate, wherein the resin comprises a polyolefin resin having the following properties (A1) to (A3):

    (A1) the MFR is from 3 to 40 g/10 min,
    (A2) the density is at least 0.880 g/cm$^3$,
    (A3) the MFR and the memory effect (ME) satisfy the following relational formula (formula 1):

$$-0.467 \times \mathrm{Ln(MFR)} + 2.93 \leq \mathrm{ME} \qquad \text{(formula 1)}$$

    (wherein Ln is a natural logarithm).

2. The use as claimed in claim 1, wherein the polyolefin resin is a polyethylene resin prepared by adding a radical generator to a high-pressure radical polymerization process low-density polyethylene and melt-kneading it at a radical reaction temperature shown by the following relational formula (formula 2):

$$T_{60} + 30 < T(2) < T_{60} + 120 \quad \text{(formula 2)}$$

    (wherein T(2) is a radical reaction temperature [°C], $T_{60}$ is a one-hour half-life temperature [°C] of the radical generator).

3. The use as claimed in claim 1, wherein the polyolefin resin is a polyethylene resin composition that contains from 10 to 90% by weight of a high-pressure radical process low-density polyethylene resin (a) satisfying the following properties (a1) to (a3) and from 10 to 90% by weight of a high-pressure radical process low-density polyethylene (b) except the resin (a) and satisfying the following properties (b1) and (b2), and satisfies the following properties (c1) to (c3):

    (a1) the MFR(a) as measured according to JIS K7210 is from 0.1 to 30 g/10 min,
    (a2) the density as measured according to JIS K7112 at a test temperature of 23°C is from 0.905 to 0.940 g/cm$^3$,
    (a3) the memory effect (ME) as measured using a melt indexer used in JIS K7210 and under a test condition of a cylinder temperature of 240°C and a constant-rate throughput flow of 3 g/min, is at least 1.7,
    (b1) the MFR(b) as measured according to JIS K7210 is from 2 to 70 g/10 min,
    (b2) the density as measured according to JIS K7112 at a test temperature of 23°C is from 0.905 to 0.940 g/cm$^3$,
    (c1) the MFR(c) as measured according to JIS K7210 is from 0.1 to 30 g/10 min,
    (c2) the density as measured according to JIS K7112 at a test temperature of 23°C is from 0.905 to 0.940 g/cm$^3$,

(c3) the memory effect (ME) as measured under the same condition as that for (a3) is at least 1.5.

4. The use as claimed in claim 1, wherein the polyolefin resin is a polyethylene resin composition prepared by adding a radical generator to a polyethylene resin composition (c) that contains from 10 to 90% by weight of a high-pressure radical process low-density polyethylene resin (a) satisfying the following properties (a1) to (a3) and from 10 to 90% by weight of a high-pressure radical process low-density polyethylene (b) except the resin (a) and satisfying the following properties (b1) and (b2), and melt-kneading it at a radical reaction temperature shown by the following relational formula (formula 2):

$$T_{60} + 30 < T(2) < T_{60} + 120 \qquad \text{(formula 2)}$$

(wherein T(2) is a radical reaction temperature [°C], $T_{60}$ is a one-hour half-life temperature [°C] of the radical generator),
(a1) the MFR(a) as measured according to JIS K7210 is from 0.1 to 30 g/10 min,
(a2) the density as measured according to JIS K7112 at a test temperature of 23°C is from 0.905 to 0.940 g/cm$^3$,
(a3) the memory effect (ME) as measured using a melt indexer used in JIS K7210 and under a test condition of a cylinder temperature of 240°C and a constant-rate throughput flow of 3 g/min, is at least 1.7,
(b1) the MFR(b) as measured according to JIS K7210 is from 2 to 70 g/10 min,
(b2) the density as measured according to JIS K7112 at a test temperature of 23°C is from 0.905 to 0.940 g/cm$^3$.

5. The use as claimed in claim 1, wherein the polyolefin resin is a polyethylene resin composition (c) that comprises from 10 to 90% by weight of a polyethylene resin (a) prepared by adding a radical generator to a high-pressure radical polymerization process low-density polyethylene and melt-kneading it at a radical reaction temperature shown by the following relational formula (formula 2), and from 10 to 90% by weight of at least one polyethylene resin (b) selected from a high-pressure radical polymerization process low-density polyethylene, and an ethylene/α-olefin copolymer:

$$T_{60} + 30 < T(2) < T_{60} + 120 \qquad \text{(formula 2)}$$

(wherein T(2) is a radical reaction temperature [°C], $T_{60}$ is a one-hour half-life temperature [°C] of the radical generator).

6. The use as claimed in claim 1, wherein the polyolefin resin is one prepared by adding a radical generator to a polyethylene resin composition (c) that comprises from 10 to 90% by weight of a high-pressure radical polymerization process low-density polyethylene resin (a) and from 10 to 90% by weight of an ethylene/α-olefin copolymer (b), and melt-kneading it at a radical reaction temperature shown by the following relational formula (formula 2):

$$T_{60} + 30 < T(2) < T_{60} + 120 \qquad \text{(formula 2)}$$

(wherein T(2) is a radical reaction temperature [°C], $T_{60}$ is a one-hour half-life temperature [°C] of the radical generator).

7. The use as claimed in claim 1, wherein the polyolefin resin is a polyethylene resin composition (c) that comprises from 10 to 90% by weight of a high-pressure radical polymerization process low-density polyethylene (a) and from 10 to 90% by weight of a long-chain branch-having ethylene/α-olefin copolymer (b).

8. A foamable laminate comprising: provided on one side of a paper-base substrate, a foamable resin layer (A) that contains the resin for forming a foamable resin layer (A) as defined in any one of claims 1 to 7; and on the other side of the substrate, a thermoplastic resin layer (B) that retains a vapor released from the substrate; wherein the thermoplastic resin layer (B) contains a thermoplastic resin (B) having the following property:

the melting point (Tm(B)) is from 100 to 140°C.

9. The foamable laminate as claimed in claim 8, wherein the melting point of the polyolefin resin of the resin for forming a foamableresin layer (A) (Tm(A)) and the melting point of the thermoplastic resin (B) (Tm(B)) satisfy the following relational formula (formula 4):

$$Tm(B) - Tm(A) \geq 10 \qquad \text{(formula 4)}.$$

10. A foamed paper produced by heating the foamable laminate of claim 8 or 9 and foaming the foamable resin layer (A).

11. The foamed paper as claimed in claim 10, wherein the height of the foamed cells formed by foaming the foamable resin layer (A) is at least 370 $\mu$m.

12. A heat-insulating container produced by forming the foamable laminate of claim 8 or 9 into a container and heating the container to foam the foamable resin layer (A).

## Patentansprüche

1. Verwendung eines Harzes zum Bilden einer schäumbarem Harzschicht (A), die auf mindestens einer Seite eines Substrats auf Papierbasis bereitgestellt werden soll,
wobei das Harz ein Polyolefinharz mit den folgenden Eigenschaften (A1) bis (A3) umfasst:

(A1) der MFR beträgt 3 bis 40 g/10 Min.,
(A2) die Dichte beträgt mindestens 0,880 g/cm$^3$,
(A3) der MFR und der Memory-Effekt (ME) erfüllen die folgende Beziehungsformel (Formel 1):

$$-0{,}467 \times Ln(MFR) + 2{,}93 \leq ME \qquad \text{(Formel 1)}$$

(wobei Ln ein natürlicher Logarithmus ist).

2. Die Verwendung wie in Anspruch 1 beansprucht, wobei das Polyolefinharz ein Polyethylenharz ist, hergestellt durch Zugeben eines Radikalbildners zu einem mittels radikalischem Hochdruckpolymerisationsverfahren erhaltenen Polyethylens niederer Dichte und Schmelzkneten desselben bei einer Radikalreaktionstemperatur, dargestellt durch die folgende Beziehungsformel (Formel 2):

$$T_{60} + 30 < T(2) < T_{60} + 120 \qquad \text{(Formel 2)}$$

(wobei T(2) eine Radikalreaktionstemperatur [°C] ist, $T_{60}$ eine Einstunden-Halbwertszeit-Temperatur [°C] des Radikalbildners ist).

3. Die Verwendung wie in Anspruch 1 beansprucht, wobei das Polyolefinharz eine Polyethylenharzzusammensetzung ist, die 10 bis 90 Gew.-% eines mittels radikalischem Hochdruckverfahren erhaltenen Polyethylenharzes niederer Dichte (a), welches die folgenden Eigenschaften (a1) bis (a3) erfüllt, und 10 bis 90 Gew.-% eines mittels radikalischem Hochdruckverfahren erhaltenen Polyethylens niederer Dichte (b) mit Ausnahme des Harzes (a), und welches die folgenden Eigenschaften (b1) und (b2) erfüllt, enthält und die folgenden Eigenschaften (c1) bis (c3) erfüllt:

(a1) der MFR (a), gemäß JIS K7210 gemessen, beträgt 0,1 bis 30 g/10 Min.,
(a2) die Dichte, gemäß JIS K7112 bei einer Testtemperatur von 23°C gemessen, beträgt 0,905 bis 0,940 g/cm$^3$,
(a3) der Memory-Effekt (ME), wie unter Verwendung eines Schmelzindexgerätes, das in JIS K7210 verwendet wird, und unter einer Testbedingung einer Zylindertemperatur von 240°C und bei einer konstanten Durchsatzflußrate von 3 g/Min. gemessen, beträgt mindestens 1,7,
(b1) der MFR (b), gemäß JIS K7210 gemessen, beträgt 2 bis 70 g/10 Min.,
(b2) die Dichte, gemäß JIS K7112 bei einer Testtemperatur von 23°C gemessen, beträgt 0,905 bis 0,940 g/cm$^3$,
(c1) der MFR (c), gemäß JIS K7210 gemessen, beträgt 0,1 bis 30 g/10 Min.,

(c2) die Dichte, gemäß JIS K7112 bei einer Testtemperatur von 23°C gemessen, beträgt 0,905 bis 0,940 g/cm$^3$,
(c3) der Memory-Effekt (ME), unter derselben Bedingung wie die für (a3) gemessen, beträgt mindestens 1,5.

4.  Die Verwendung wie in Anspruch 1 beansprucht, wobei das Polyolefinharz eine Polyethylenharzzusammensetzung ist, hergestellt durch Zugeben eines Radikalbildners zu einer Polyethylenharzzusammensetzung (c), die 10 bis 90 Gew.-% eines mittels radikalischem Hochdruckverfahren erhaltenen Polyethylenharzes niederer Dichte (a), welches die folgenden Eigenschaften (a1) bis (a3) erfüllt, und 10 bis 90 Gew.-% eines mittels radikalischem Hochdruckverfahren erhaltenen Polyethylens niederer Dichte (b) mit Ausnahme des Harzes (a), und welches die folgenden Eigenschaften (b1) und (b2) erfüllt, enthält und Schmelzkneten derselben bei einer Radikalreaktionstemperatur, dargestellt durch die folgende Beziehungsformel (Formel 2):

$$T_{60} + 30 < T(2) < T_{60} + 120 \qquad \text{(Formel 2)}$$

(wobei T(2) eine Radikalreaktionstemperatur [°C] ist, $T_{60}$ eine Einstunden-Halbwertszeit-Temperatur [°C] des Radikalbildners ist),
(a1) der MFR (a), gemäß JIS K7210 gemessen, beträgt 0,1 bis 30 g/10 Min.,
(a2) die Dichte, gemäß JIS K7112 bei einer Testtemperatur von 23°C gemessen, beträgt 0,905 bis 0,940 g/cm$^3$,
(a3) der Memory-Effekt (ME), unter Verwendung eines Schmelzindexgerätes, das in JIS K7210 verwendet wird, und unter einer Testbedingung einer Zylindertemperatur von 240°C und bei einer konstanten Durchsatzflußrate von 3 g/Min. gemessen, beträgt mindestens 1,7,
(b1) der MFR (b), gemäß JIS K7210 gemessen, beträgt 2 bis 70 g/10 Min.,
(b2) die Dichte, gemäß JIS K7112 bei einer Testtemperatur von 23°C gemessen, beträgt 0,905 bis 0,940 g/cm$^3$.

5.  Die Verwendung wie in Anspruch 1 beansprucht, wobei das Polyolefinharz eine Polyethylenharzzusammensetzung (c) ist, die 10 bis 90 Gew.-% eines Polyethylenharzes (a), hergestellt durch Zugeben eines Radikalbildners zu einem mittels radikalischem Hochdruckpolymerisationsverfahren erhaltenen Polyethylens niederer Dichte und Schmelzkneten derselben bei einer Radikalreaktionstemperatur, dargestellt durch die folgende Beziehungsformel (Formel 2), und 10 bis 90 Gew.-% mindestens eines Polyethylenharzes (b), ausgewählt aus einem mittels radikalischem Hochdruckpolymerisationsverfahren erhaltenen Polyethylens niederer Dichte, und ein Ethylen/$\alpha$-Olefincopolymer umfasst:

$$T_{60} + 30 < T(2) < T_{60} + 120 \qquad \text{(Formel 2)}$$

(wobei T(2) eine Radikalreaktionstemperatur [°C] ist, $T_{60}$ eine Einstunden-Halbwertszeit-Temperatur [°C] des Radikalbildners ist).

6.  Die Verwendung wie in Anspruch 1 beansprucht, wobei das Polyolefinharz eines ist, das durch Zugeben eines Radikalbildners zu einer Polyethylenharzzusammensetzung (c) hergestellt ist, die 10 bis 90 Gew.% eines mittels radikalischem Hochdruckpolymerisationsverfahren erhaltenen Polyethylenharzes niederer Dichte (a) und 10 bis 90 Gew.-% eines Ethylen-/$\alpha$-Olefincopolymers (b) umfasst, und Schmelzkneten derselben bei einer Radikalreaktionstemperatur, dargestellt durch die folgende Beziehungsformel (Formel 2):

$$T_{60} + 30 < T(2) < T_{60} + 120 \qquad \text{(Formel 2)}$$

(wobei T(2) eine Radikalreaktionstemperatur [°C] ist, $T_{60}$ eine Einstunden-Halbwertszeit-Temperatur [°C] des Radikalbildners ist).

7.  Die Verwendung wie in Anspruch 1 beansprucht, wobei das Polyolefinharz eine Polyethylenharzzusammensetzung (c) ist, die 10 bis 90 Gew.-% eines mittels radikalischem Hochdruckpolymerisationsverfahren erhaltenen Polyethylens niederer Dichte (a) und 10 bis 90 Gew.-% eines langkettigen Zweig enthaltenden Ethylen-/$\alpha$-Olefincopolymers (b) umfasst.

**8.** Ein schäumbares Laminat, umfassend: bereitgestellt auf einer Seite eines Substrats auf Papierbasis eine schäumbare Harzschicht (A), die das Harz zum Bilden einer schäumbaren Harzschicht (A) wie in einem der Ansprüche 1 bis 7 definiert enthält; und auf der anderen Seite des Substrats eine thermoplastische Harzschicht (B), die einen aus dem Substrat freigesetzten Dampf zurückhält;
wobei die thermoplastische Harzschicht (B) ein thermoplastisches Harz (B) mit der folgenden Eigenschaft enthält:

der Schmelzpunkt (Tm(B)) beträgt 100 bis 140°C.

**9.** Das schäumbare Laminat wie in Anspruch 8 beansprucht, wobei der Schmelzpunkt des Polyolefinharzes des Harzes zum Bilden einer schäumbaren Harzschicht (A) (Tm(A)) und der Schmelzpunkt des thermoplastischen Harzes (B) (Tm(B)) die folgende Beziehungsformel (Formel 4) erfüllen:

$$Tm(B) - Tm(A) \geq 10 \qquad \text{(Formel 4).}$$

**10.** Ein geschäumtes Papier, hergestellt durch Erwärmen des schäumbaren Laminats nach Anspruch 8 oder 9 und Schäumen der schäumbaren Harzschicht (A).

**11.** Das geschäumte Papier wie in Anspruch 10 beansprucht, wobei die Höhe der durch Schäumen der schäumbaren Harzschicht (A) gebildeten geschäumten Zellen mindestens 370 $\mu$m beträgt.

**12.** Ein wärmedämmender Behälter, hergestellt durch Formen des schäumbaren Laminats nach Anspruch 8 oder 9 zu einem Behälter und Erwärmen des Behälters, um die schäumbare Harzschicht (A) zu schäumen.

## Revendications

**1.** Utilisation d'une résine pour la formation d'une couche de résine expansible (A) destinée à être déposée sur au moins une face d'un substrat à base de papier,
dans laquelle la résine comprend une résine polyoléfinique ayant les propriétés suivantes (A1) à (A3)

(A1) le MFR (indice de fluidité) est de 3 à 40 g/10 min,
(A2) la densité est d'au moins 0,880 g/cm$^3$,
(A3) le MFR et l'effet mémoire (ME) satisfont à la formule relationnelle suivante (formule 1) :

$$-0,467 \text{ x } Ln(MFR) + 2,93 \leq ME \qquad \text{(formule 1)}$$

(dans laquelle Ln est un logarithme naturel).

**2.** Utilisation selon la revendication 1, dans laquelle la résine polyoléfinique est une résine de polyéthylène préparée par addition d'un générateur radicalaire à un polyéthylène basse densité du procédé de polymérisation radicalaire haute pression et par malaxage à l'état fondu de celle-ci à une température de réaction radicalaire indiquée par la formule relationnelle suivante (formule 2) :

$$T_{60} + 30 < T(2) < T_{60} + 120 \quad \text{(formule 2)}$$

(dans laquelle T(2) est une température de réaction radicalaire [°C], $T_{60}$ est une température de demie vie pendant une heure [°C] du générateur radicalaire).

**3.** Utilisation selon la revendication 1, dans laquelle la résine polyoléfinique est une composition de résine de polyéthylène qui contient de 10 à 90 % en poids d'une résine (a) de polyéthylène basse densité du procédé radicalaire haute pression satisfaisant aux propriétés suivantes (a1) à (a3) et de 10 à 90 % en poids d'un polyéthylène (b) basse densité du procédé radicalaire haute pression à l'exception de la résine (a) et satisfaisant aux propriétés suivantes (b1) et (b2) et qui satisfait aux propriétés suivantes (c1) à (c3) :

(a1) le MFR(a) tel que mesuré selon JIS K7210 est de 0,1 à 30 g/10 min,
(a2) la densité telle que mesurée selon JIS K7112 à une température d'essai de 23 °C est de 0,905 à 0,940 g/cm$^3$,
(a3) l'effet mémoire (ME) tel que mesuré en utilisant un indexeur de fusion utilisé dans JIS K7210 et dans des conditions d'essai d'une température de cylindre de 240 °C et d'un débit d'écoulement à vitesse constante de 3 g/min, est d'au moins 1,7,
(b1) le MFR(b) tel que mesuré selon JIS K7210 est de 2 à 70 g/10 min,
(b2) la densité telle que mesurée selon JIS K7112 à une température d'essai de 23 °C est de 0,905 à 0,940 g/cm$^3$,
(c1) le MFR(c) tel que mesuré selon JIS K7210 est de 0,1 à 30 g/10 min,
(c2) la densité telle que mesurée selon JIS K7112 à une température d'essai de 23 °C est de 0,905 à 0,940 g/cm$^3$,
(c3) l'effet mémoire (ME) tel que mesuré dans les mêmes conditions que celles pour (a3) est d'au moins 1,5.

4. Utilisation selon la revendication 1, dans laquelle la résine polyoléfinique est une composition de résine de polyéthylène préparée par addition d'un générateur radicalaire à une composition de résine de polyéthylène (c) qui contient de 10 à 90 % en poids d'une résine (a) de polyéthylène basse densité du procédé radicalaire haute pression satisfaisant aux propriétés suivantes (a1) à (a3) et de 10 à 90 % en poids d'un polyéthylène (b) basse densité du procédé radicalaire haute pression à l'exception de la résine (a) et satisfaisant aux propriétés suivantes (b1) et (b2), et par malaxage à l'état fondu de celle-ci à une température de réaction radicalaire indiquée par la formule relationnelle suivante (formule 2) :

$$T_{60} + 30 < T(2) < T_{60} + 120 \quad \text{(formule 2)}$$

(dans laquelle T(2) est une température de réaction radicalaire [°C], $T_{60}$ est une température de demie vie pendant une heure [°C] du générateur radicalaire),
(a1) le MFR(a) tel que mesuré selon JIS K7210 est de 0,1 à 30 g/10 min,
(a2) la densité telle que mesurée selon JIS K7112 à une température d'essai de 23 °C est de 0,905 à 0,940 g/cm$^3$,
(a3) l'effet mémoire (ME) tel que mesuré en utilisant un indexeur de fusion utilisé dans JIS K7210 et dans des conditions d'essai d'une température de cylindre de 240 °C et d'un débit d'écoulement à vitesse constante de 3 g/min, est d'au moins 1,7,
(b1) le MFR(b) tel que mesuré selon JIS K7210 est de 2 à 70 g/10 min,
(b2) la densité telle que mesurée selon JIS K7112 à une température d'essai de 23 °C est de 0,905 à 0,940 g/cm$^3$.

5. Utilisation selon la revendication 1, dans laquelle la résine polyoléfinique est une composition de résine de polyéthylène (c) qui comprend de 10 à 90 % en poids d'une résine de polyéthylène (a) préparée par addition d'un générateur radicalaire à un polyéthylène basse densité du procédé de polymérisation radicalaire haute pression et par malaxage à l'état fondu de celle-ci à une température de réaction radicalaire indiquée par la formule relationnelle suivante (formule 2), et de 10 à 90 % en poids d'au moins une résine de polyéthylène (b) choisie parmi un polyéthylène basse densité du procédé radicalaire haute pression, et un copolymère d'éthylène/oc-oléfine :

$$T_{60} + 30 < T(2) < T_{60} + 120 \quad \text{(formule 2)}$$

(dans laquelle T(2) est une température de réaction radicalaire [°C], $T_{60}$ est une température de demie vie pendant une heure [°C] du générateur radicalaire).

6. Utilisation selon la revendication 1, dans laquelle la résine polyoléfinique est une résine préparée par addition d'un générateur radicalaire à une composition de résine de polyéthylène (c) qui comprend de 10 à 90 % en poids d'une résine (a) de polyéthylène basse densité du procédé de polymérisation radicalaire haute pression et de 10 à 90 % en poids d'un copolymère d'éthylène/$\alpha$-oléfine (b), et par malaxage à l'état fondu de celle-ci à une température de réaction radicalaire indiquée par la formule relationnelle suivante (formule 2) :

$$T_{60} + 30 < T(2) < T_{60} + 120 \quad \text{(formule 2)}$$

(dans laquelle T(2) est une température de réaction radicalaire [°C], $T_{60}$ est une température de demie vie pendant une heure [°C] du générateur radicalaire).

**7.** Utilisation selon la revendication 1, dans laquelle la résine polyoléfinique est une composition de résine de polyéthylène (c) qui comprend de 10 à 90 % en poids d'un polyéthylène (a) basse densité du procédé de polymérisation radicalaire haute pression et de 10 à 90 % en poids d'un copolymère d'éthylène/α-oléfine (b) ayant une ramification à chaîne longue.

**8.** Stratifié expansible comprenant : déposée sur une face d'un substrat à base de papier, une couche de résine expansible (A) qui contient la résine destinée à former une couche de résine expansible (A) telle que définie selon l'une quelconque des revendications 1 à 7 ; et sur l'autre face du substrat, une couche de résine thermoplastique (B) qui retient la vapeur libérée du substrat ;
dans lequel la couche de résine thermoplastique (B) contient une résine thermoplastique (B) ayant la propriété suivante :

le point de fusion (Tm(B)) est de 100 à 140 °C.

**9.** Stratifié expansible selon la revendication 8, dans lequel le point de fusion de la résine polyoléfinique de la résine destinée à former une couche de résine expansible (A) (Tm(A)) et le point de fusion de la résine thermoplastique (B) (Tm(B)) satisfont à la formule relationnelle suivante (formule 4) :

$$Tm(B) - Tm(A) \geq 10 \quad \text{(formule 4)}.$$

**10.** Papier expansé produit par chauffage du stratifié expansible selon la revendication 8 ou 9 et expansion de la couche de résine expansible (A).

**11.** Papier expansé selon la revendication 10, dans lequel la hauteur des cellules expansées formées par l'expansion de la couche de résine expansible (A) est d'au moins 370 $\mu$m.

**12.** Récipient thermo-isolant produit par formage du stratifié expansible selon la revendication 8 ou 9 en un récipient et chauffage du récipient pour expanser la couche de résine expansible (A).

[Fig. 1]

Regional phase in Europe
based on PCT/JP2008/073244
Japan Polyethylene Corporation
Our Ref.: S2096 EP

[Fig. 2]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 48032283 B
- JP 57110439 A
- JP 7232774 A
- JP 10128928 A
- JP 2007168178 A
- JP 2008105747 A
- JP S6035006 A
- JP S6035007 A
- JP S6035008 A
- JP H03163088 A
- JP S61296008 A
- JP 2000212341 A
- JP 2007327803 A
- JP 2008233694 A

**Non-patent literature cited in the description**

- *Journal of Rheology,* 1998, vol. 42 (1), 81-110